(19) Europäisches Patentamt
European Patent Office
Office européen des brevets

(11) EP 0 452 811 B1

(12) **EUROPEAN PATENT SPECIFICATION**

(45) Date of publication and mention of the grant of the patent:
**10.07.1996 Bulletin 1996/28**

(51) Int Cl.6: **G03C 3/00**, G03C 1/34

(21) Application number: **91105765.1**

(22) Date of filing: **11.04.1991**

(54) **Package of photosensitive material**

Verpackung von photoempfindlichem Material

Emballage de produit photosensible

(84) Designated Contracting States:
**DE FR GB IT NL**

(30) Priority: **20.04.1990 JP 104727/90**

(43) Date of publication of application:
**23.10.1991 Bulletin 1991/43**

(73) Proprietor: **FUJI PHOTO FILM CO., LTD.**
**Kanagawa-ken (JP)**

(72) Inventor: **Shibahara, Yoshihiko,**
**c/o FUJI PHOTO FILM CO. LTD.**
**Minami Ashigara-shi, Kanagawa (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**JP-A-60 153 039** **US-A- 4 887 776**

- **PATENT ABSTRACTS OF JAPAN vol. 13, no. 215 (P-874)(3563) 19 May 1989 & JP-A- 1 031 145**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 452 811 B1

## Description

### Background of the Invention

The present invention relates to a film cartridge containing a photographic film. In particular, the present invention relates to a small film cartridge containing a photographic film capable of facilitating charging of a camera with a photographic film. The photographic properties of a photographic film comprising a silver halide in the film cartridge of the present invention can be protected from deterioration during storage before the use.

In a conventional photographic film patrone, the film is wound round a spool not tightly but loosely and, therefore, the film cannot be sent toward the outside by rotating the spool in a direction opposite to the winding direction. Accordingly, it has been necessary to previously draw out a proper length of an end of the photographic film from the patrone so that the user can hook the end of the film in a film-feeding mechanism of a camera.

However, this operation takes time and since it requires some amount of skill, the camera is sometimes not correctly charged with the film. In such a case, the photographing is conducted while the film is not advanced.

Under these conditions, the developement of a camera which does not necessitate such an operation has been demanded.

Such a camera can be produced if the photographic film can be sent out from the cartridge. Namely, if the photographic film can be sent out from the cartridge, the film can be engaged with a film-advancing mechanism in the camera by sending out the end of the film to make the operation of hooking the end of the film in the film-advancing mechanism of the camera unnecessary. It is necessitated, therefore, to develope a cartridge capable of sending out the film therefrom in place of the ordinary patrone.

It is considered that the photographic film can be sent out from the cartridge by a method comprising rotating the spool in a direction opposite to the film-winding direction. In this method, the free space in the cartridge must be limited to below a certain degree, since when the free space is large, the film is reversed to make it impossible that the end of the film is sent out from the cartridge by the rotation of the spool.

However, on the other hand, when the free space is reduced too much, a new problem is posed that when the film cartridge containing the photographic film is stored particularly at a high temperature, deterioration of the photographic properties of the photographic film is accelerated and, particularly, fog of the photographic film is increased with time. Thus the cartridge which can be easily set in a camera could not be produced.

U.S. Patent No. 4,887,776 discloses a film cassette wherein a spool includes two coaxial core pieces having a convoluted film roll coiled about them, whose outermost convolution is a film leader, and respective flanges fixed to the core pieces which radially extend over the opposite sides of the film roll. At least one of the core pieces is supported for movement axially toward the other one to move at least one of the flanges axially toward the other one to provide axial clamping forces at the opposite sides of the film roll. A film stripper-guide is received between the outermost convolution and the nextinward convolution of the film roll to strip the outermost convolution from the flanges and guide it through a film passageway to the exterior of the cassette shell responsive to rotation of the spool in a film unwinding direction during application of the axial clamping forces. According to this document, at least one of the flanges includes integral means for concentrating the axial clamping forces substantially at the outermost convolution of the film roll and preventing application of the axial clamping forces substantially at the more-inward convolutions of the film roll.

After intensive investigations, the inventors have found that the deterioration of the photographic properties caused when the free space in the cartridge is small is caused because the amount of water formed from the photographic film and the concentration of a gas harmful to the photographic properties are increased. No process has been proposed heretofore for effectively preventing deterioration of the photographic properties due to the harmful gas.

### Summary of the Invention

An object of the present invention is to provide a small film cartridge of photographic film which can be easily and surely installed in a camera and which has improved photographic properties resistant to deterioration with time.

The object of the present invention is attained by a film cartridge containing a photographic film, which comprises a spool, a photographic film engaged with the spool at an end and rolled round the spool and a cartridge body, the whole photographic film being placed in the cartridge, wherein the void volume V in the cartridge which is represented by the following formula is not higher than 0.25, the photographic film comprises at least one photosensitive silver halide emulsion layer formed on a transparent support and the photographic film contains a compound of the following general formulae [I],

$$V = \frac{B-A}{B}$$

wherein

A = (cross-sectional area of the rolled film)
= (thickness of film) x (length of film)
B = (cross-sectional area of inside of cartridge)
= (cross-sectional area of cartridge body) - (cross-sectional area of spool);

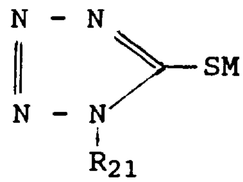

(I)

wherein $R_{21}$ represents an aliphatic, aromatic or heterocyclic group substituted with at least one -COOM or $-SO_3$ M, M being a hydrogen atom, alkali metal atom, quaternary ammonium or quaternary phosphonium.

Brief Description of the Drawings

Figs. 1, 2 and 3 are cross-sectional views showing parts of cartridges and films contained therein according to the present invention.

1 and 35 . . . . . spool,
2 . . . . . film,
3,35 . . . . . cartridge.

Description of the Preferred Embodiments

In the film cartridge of the present invention, it is considered that the photographic film can be sent out from the cartridge by rotating the spool round which the film is wound in a direction opposite to the film-winding direction. In this method, the free space in the cartridge must be limited to a certain degree. When the free space is large, the film is reversed to make it impossible that the end of the film is sent out from the cartridge by the rotation of the spool.

The film cannot be stably sent out unless the void volume of the cartridge as represented by the above formula is 0.25 or less. In the formula, A represents the cross-sectional area of the film roll and B represents the cross-sectional area of the inside of the cartridge. They are defined as follows:

A = (thickness of film) x (length of film)
B = (cross-sectional area of cartridge body) - (cross-sectional area of spool);

The unit is, for example, mm. The size is determined at a temperature of 25 °C and at a relative humidity of 55 %.

The film length is from an end to the other end of the film. When the end of the film is not straight, the most projected part of the end is deemed to be the end. When an end of the film is inserted into the spool, a portion of the film at the slit of the spool is deemed to be the end thereof.

The thickness of the film is the total of the layers including the film support and gelatin layers containing an emulsion, which is determined by measuring the thickness of the film at ten arbitrary points thereof with a contact film thickness meter (Electronic Micrometer manufactured by Anritsu Electric Co., Ltd.) and taking an average.

The cross-sectional area of the spool is that of a part of the spool round which the film is to be wound.

The cross-sectional area of the cartridge body is the area of the inside of the cartridge not at the upper or lower end thereof but at a part round which the film is to be wound. When the cartridge has a rib formed inside thereof in order to adjust the position of the film or to smooth the sending of the film, the cross-sectional area of the inside of the rib of a cartridge is employed. When the cartridge has a flange for controlling the film roll, the cross-sectional area of the inside the flange which adjusts the outermost periphery of the film is employed.

The void volume V is $0<V\leqq0.25$, preferably $0.04 \leqq V \leqq 0.22$ and more preferably $0.08 \leqq V \leqq 0.18$.

Figs. 1 (a) and (b) show an example of the cartridge of the present invention. A photographic film cartridge 20 comprises a spool 1, a photographic film 2 wound round the spool 1 with an end thereof engaged with the spool 1 and a cartridge body 3. The spool 1 is placed in the cartridge body 3 so that it is axially rotatable. The spool 1 can be rotated from outside the cartridge body 3. The cartridge body 3 has an outlet 4 for drawing out the photographic film 2. Light-screening components 4a for keeping the inside of the cartridge body 3 from light is provided in the outlet 4.

In the photographic film cartridge 20 of this embodiment, a pair of ribs 8 having a width of about 15 to 20 % based on the film width and extending along the circumference on the inner surface of the cartridge body 3 are provided at positions corresponding to both ends of the width of the film 2. The ribs 8 open toward the outlet 4 so that the photographic film 2 can be drawn through it. An end 6 of the film 2 is positioned at an end 7 of the film-outlet 4.

The ribs 8 kept in contact with the outermost surface of the roll of the film 2 keeps the film 2 tightly wound round the spool 1 by pressing it.

In this case, the term "cross-sectional area of cartridge body" is the area of the inside of the rib 8.

The outer diameter of the spool 1 is determined as follows: it is difficult, as described above, to tightly wind the film 2 round the spool 1 while the innermost surface 2a of the film is brought into contact with the outer periphery of the spool 1. It is unavoidable, therefore, that a gap is formed between the innermost surface 2a of the film and the spool 1 in this case. To avoid the formation of the gap, the void volume V must be reduced to 0.25 or less. Further, when the distance h between the innermost surface of the film 2a and the spool 1 is too long, the film 2 turns reversely as shown in Fig. 2. Therefore, the outer diameter of the spool 1 is preferably such that when the gap is formed between the innermost surface 2a of the film and the spool 1, the distance h between them will be 2 mm or less. The relationship between them can be formulated as follows:

$$b / 2 = a / 2 + h + c \cdot d + t ,$$

and, therefore:

$$a / 2 = b / 2 - t - h - c \cdot d$$

wherein a represents the outer diameter of the spool, b represents the inner diameter of the cartridge body, t represents the thickness of the rib, c represents the thickness of the film and d represents the number of turns of the roll which varies depending on the length of the film.

Since the distance h is represented by the following formula:

$$h = b / 2 - a / 2 - c \cdot d - t$$

and, therefore, when $h \leqq 2$ mm, the outer diameter a of the spool is as follows:

$$b / 2 - t - c \cdot d - 2 \leqq a /2.$$

When the spool rotation torque is set at 0.8 kgf· cm or less by controlling the distance h at 2 mm or less, the reverse turn of the photographic film 2 can be prevented.

It is unnecessary to form the ribs 8 along the whole peripheral length of the inner surface of the cartridge body 3 but they may be formed along only a part of the peripheral length of the cartridge body 3. Further, the ribs 8 may be formed only at positions corresponding to both ends of the width of the film 2 as in this embodiment or they may be formed also along the whole width of the film 2.

The material for the ribs 8 is selected from those which do not hurt the film 2 such as plastics. The material may be selected from those having some elasticity such as urethane. when the thickness of the urethane ribs 8 is determined so that they will be shrunk when the film 2 wound round the spool 1 is placed in the cartridge body 3, the outermost surface of the film roll 2 is pressed by rebound of the shrunk ribs 8 and, therefore, even after a considerable length of the film 2 has been drawn out to make the outer diameter of the roll smaller, the film roll can be kept tight. The cross-sectional area of the cartridge body is the cross-sectional area of the inside of the ribs prior to the sending-out of the film in this case.

In all of the above embodiments, the method of keeping the film-outlet from light is not particularly limited. A light-shading felt component called 'teremp' used heretofore can be used. Alternatively, the film-outlet is formed so that it can be closed when the film is not drawn through it. The end 6 of the film 2 is not necessarily trued up at the end 7 of the film-outlet 4 and it is enough that the end 6 of the film 2 is in the patrone body 3. preferably, however, the end 6 of the film 2 is in the film-outlet 4.

In another preferred embodiment of the cartridge, the shape of the spool flange is modified as described in Japanese Patent Application No. hei 1-172594 so that the film is delivered by rotating the spool while the edge faces of the outermost part of the film roll are pressed.

In still another preferred embodiment of the cartridge, ribs opposing to each other are formed on a pair of flanges capable of rotating relatively to the spool shaft to hold the both sides of the film roll in order to prevent the roll from loosening and the shape of the ribs is modified at the film-delivering portion so as to deliver the film by rotating the spool as described in U.S. Patent No. 4,834,306. In this case, the cross-sectional area of the cartridge body is the cross-sectional area thereof inside of the separation claw.

A further preferred embodiments of the cartridgte are described in U.S. Patent Nos. 4,846,418 and 4,832,275.

The package of the present invention is usually stored in a sealed vessel.

The sealed vessel may be any of those capable of keeping the photosensitive material contained therein from the outer world. The term 'separation' indicates that air in the outer world is substantially separated from air in the vessel. Thus any vessel satisfying the above-described conditions can be used as the sealed vessel irrespective of the material or shape thereof. Such vessels include, for example, those with a lid which are prepared with a resin having a low

vapor permeability such as polyethylene, polypropylene or polyvinyl chloride. They can be rectangular parallelepiped or cylindrical as an ordinary P case. In addition, the cartridge per se can be sealed so as not to use the P case, while the conventional patrone per se has no sealing properties. In the present invention wherein the end of the photographic material (film ) has not been drawn through the film-outlet of the cartridge but kept in the cartridge, the sealing of the cartridge per se is not always necessary and the cartridge can be vacuum-sealed in a moisture-proof film such as a polyethylene film, polypropylene film or polyvinyl chloride film.

The photographic film in the film cartridge of the present invention comprises a transparent support and at least one photosensitive silver halide emulsion layer formed on the support.

The material of the support is not particularly limited. It is, for example, a cellulose triacetate film, polyester film or the like. To make the package small, the thickness of the support is preferably not more than 125 μm, more preferably 85 to 115 μm.

The photographic film comprises a hydrophilic colloid layer including at least one silver halide emulsion layer formed on the support. The thickness of the hydrophilic colloid layer at 25 ° C at a humidity of 55 % under pressure of 1 atm is preferably in the range of 5 to 22 μm , more preferably 8 to 18 μm.

As described above, when the void volume in the cartridge is reduced, the photographic properties of the packed photographic film are deteriorated with time and particularly, the fogging is accelerated. Usually, various compounds can be incorporated into the hydrophilic colloid layer in order to stabilize the photographic properties.

These compounds include tetrazaindene compounds of the following general formula:

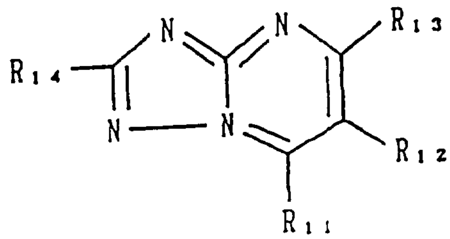

or

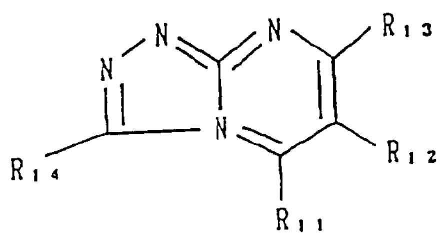

wherein $R_{11}$, $R_{12}$, $R_{13}$ and $R_{14}$ may be the same or different from one another and they each represent a hydrogen atom, substituted or unsubstituted alkyl group, substituted or unsubstituted aryl group, substituted or unsubstituted amino group, hydroxyl group, alkoxyl group, alkylthio group, substituted or unsubstituted carbamoyl group, halogen atom, cyano group, carboxyl group, alkoxycarbonyl group or heterocyclic residue, $R_{11}$ and $R_{12}$ or $R_{12}$ and $R_{13}$ may form together a five-membered or six-membered ring, with the proviso that at least one of $R_{11}$ and $R_{13}$ represents a hydroxyl group; nitroindazoles triazoles, benzotriazoles, benzimidazoles, benzotriazole compounds of the following general formula:

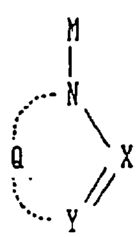

wherein X and Y each represent a carbon atom or nitrogen atom, Q represents an atomic group necessitated for forming a five-membered or six-membered heterocycle, which may be further condensed, and M represents a hydrogen atom or a cation such as an alkali metal ion or ammonium ion;
mercapto compounds; quaternary salt compounds; and thion compounds.

However, with these compounds, it is impossible to sufficiently improve the storability which has been deteriorated by reducing the void volume in the cartridge. Thus the film cartridge as intended in the present invention could not be obtained in the prior art. It has been found that the incorporation of at least one of specified fog inhibitors (FI) described

in Japanese Patent Unexamined Published Application (hereinafter referred to as "J.P. KOKAI") No. 60-153039 into the hydrophilic colloid layer of the photographic film in the film cartridge of the present invention is particularly effective for attaining the object of the present invention. Now, the description will be made on the fog inhibitors.

The FI used in the present invention is presented by the following general formula (I)

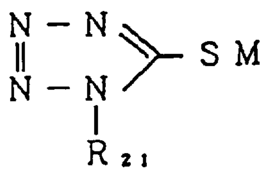

wherein $R_{21}$ represents an aliphatic, aromatic or heterocyclic group substituted with at least one -COOM or $-SO_3M$, M being a hydrogen atom, alkali metal atom, quaternary ammonium or quaternary phosphonium.

The term "aliphatic groups" herein indicates alkyl groups, alkenyl groups and alkynyl groups. The aromatic groups include, for example, phenyl group and naphthyl group. The heterocyclic groups include 3- to 8-membered, preferably 5- or 6-membered heterocyclic group having at least one hetero atom selected from among O, N, S and Se and at least one carbon atom.

$R_{21}$ in the above general formula [I] is preferably a phenyl group substituted with at least one COOM or $-SO_3M$.

Examples of the alkali metals in the above general formula [I] include sodium, potassium and lithium. Examples of the quaternary ammoniums include $-NH_4$, $-N(CH_3)_4$ and $-N(C_2H_5)_4$.

$R_{21}$ is represented by the formula:

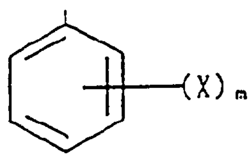

wherein X is preferably COOM.

X in the above general formula [I] represents a sulfo group, carboxyl group or a salt thereof, or a group selected from the group consisting of halogen atoms (such as fluorine, chlorine and bromine atoms), alkyl groups (such as methyl, ethyl, hydroxyethyl, benzyl and β-dimethylaminoethyl groups), aryl groups (such as phenyl group), alkoxyl groups (such as methoxyl and ethoxyl groups), aryloxy groups (such as phenyloxy group), alkoxycarbonyl groups (such as methoxycarbonyl group), acylamino groups (such as acetylamino and methoxymethylcarbonylamino groups), carbamoyl group, alkylcarbamoyl groups (such as methylcarbamoyl and ethylcarbamoyl groups), dialkylcarbamoyl groups (such as dimethylcarbamoyl group), arylcarbamoyl groups (such as phenylcarbamoyl group), alkylsulfonyl groups (such as methylsulfonyl group), arylsulfonyl groups (such as phenylsulfonyl group), alkylsulfonamido groups (such as methanesulfonamido group), arylsulfonamido groups (such as phenylsulfonamido group), sulfamoyl group, alkylsulfamoyl groups (such as ethylsulfamoyl group), dalylsulfamoyl groups (such as dimethylsulfamoyl group), alkylthio groups (such as methylthio group), arylthio groups (such as phenylthio group), cyano group, nitro group, hydroxyl group and amino group. When the compound has two substituents, they may be the same or different from each other.

X is preferably $-SO_3M$, -COOM, an alkyl group having 3 or less carbon atoms, substituted alkyl group, alkoxyl group or substituted alkoxyl group.

<u>m</u> is preferably 1 or 2.

Examples of these compounds are as follows:

(I -44)

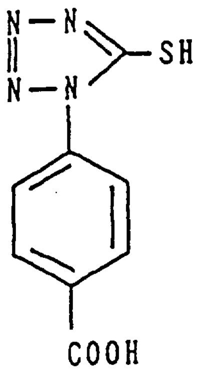

(I - 3)

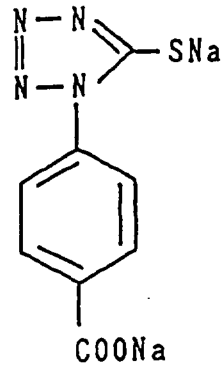

(I -45)

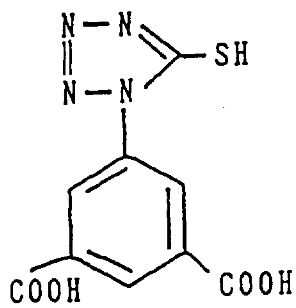

(I -46)

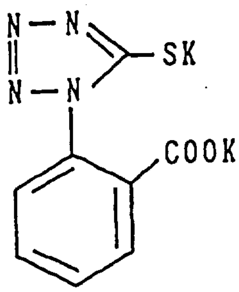

(I -47)

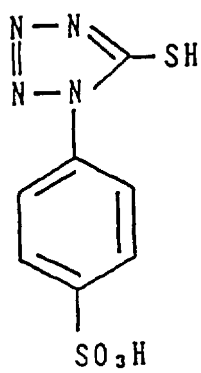

(I -48)

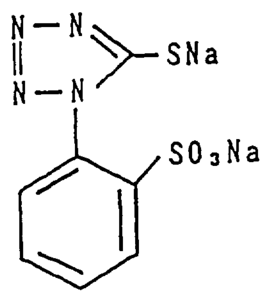

(I -49)

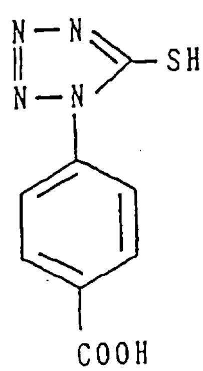

(I -50)

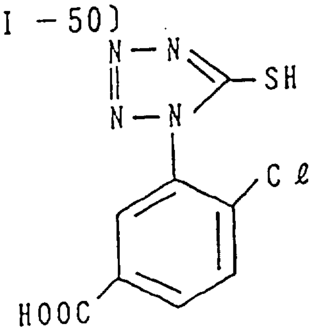

(I-51)

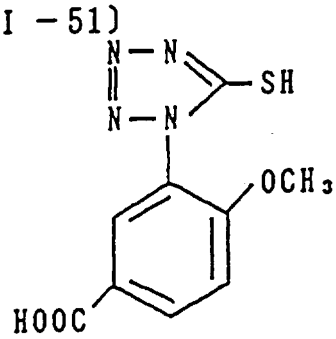

(I-52)

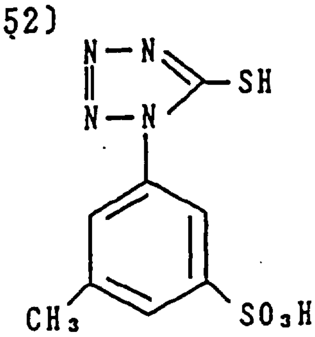

(I-53)

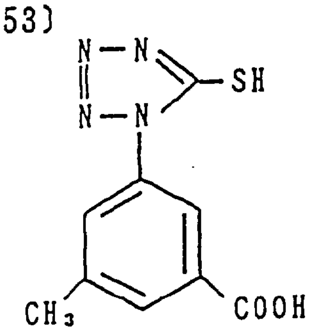

(I-54)

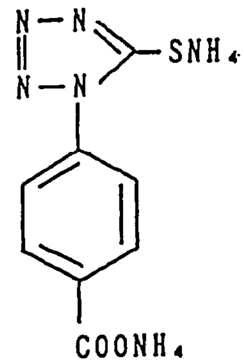

(I-55)

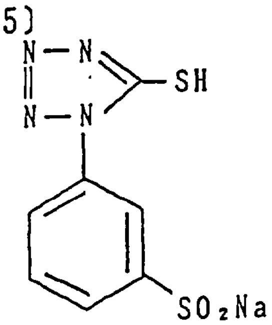

(I-56)

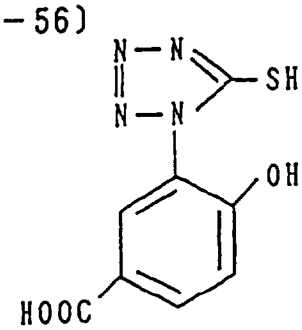

(I-57)

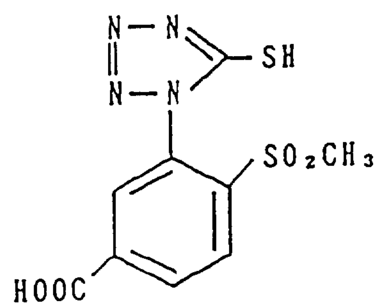

The FI compounds may be user either alone or in the form of a mixture of two or more of them in the present invention. The FI compound is used in an amount of preferably $10^{-6}$ to $10^{-1}$, more preferably $10^{-5}$ to $10^{-2}$ mol per 1 mol of silver halide.

The FI compound is usually dissolved in water or an alcohol and the solution is added to the silver halide emulsion or coating liquid.

Although the FI compound can be incorporated in any of the hydrophilic colloid layer, it is particularly effective to

incorporate it into a hydrophilic colloid layer containing a photosensitive silver halide emulsion.

Deterioration of photographic properties with time due to a photographically harmful gas, the amount of which is increased as the void in the cartridge is reduced, can be unexpectedly effectively inhibited by incorporating a compound of the general formula [I] into the hydrophilic colloid layer.

The film cartridge of the present invention can contain various photographic films including black-and-white and color photographic films. The present invention is preferably applicable to the ordinary color negative films. The present invention will be, therefore, illustrated with reference to ordinary color negative films.

The photographic films used in the present invention may comprise at least seven layers including silver halide emulsion layers, i.e. a blue-sensitive layer, green-sensitive layer and red-sensitive layer formed on a support in which these layers are simultaneously coated on the support.

In the multi-layered silver halide color photosensitive materials, the arrangement of the unit photosensitive layers is: a red-sensitive layer, a green-sensitive layer and a blue-sensitive layer in this order from the support. However, the order may be reversed or a different sensitive layer may be interposed between two layers having the same sensitivity depending on the purpose.

A layer structure comprising the ordinary three layers, i.e. blue-sensitive layer, green-sensitive layer and red-sensitive layer, and in addition, one or more color-sensitive layers formed for the purpose of improving the color reproduction is described in J.P. KOKAI Nos. 61-34541, 61-201245, 61-198236 and 62-160448. In this case, the position of the fourth color-sensitive layer and other color-sensitive photosensitive layers are not limted. The fourth or another color-sensitive photosensitive layer may comprise a single layer or multiple layers.

A photoinsensitive layer such as an intermediate layer can be provided between the silver halide photosensitive layers or as the top layer or the bottom layer.

The intermediate layer may contain a coupler or DIR compound as described in J.P. KOKAI Nos. 61-43748, 59-113438, 59-113440, 61-20037 and 61-20038, or an ordinary color-mixing inhibitor.

The two or more silver halide emulsion layers constituting the unit photosensitive layer have preferably a structure consisting of two layers, i.e. a high-sensitivity emulsion layer and a low-sensitivity emulsion layer, as described in West German Patent No. 1,121,470 or British Patent No. 923,045. Usually, it is peferable that the arrangement of the layers be such that the sensitivity thereof decreases gradually toward the support. A photoinsensitive layer may be provided between the silver halide emulsion layers. An emulsion layer having a low sensitivity may be formed away from the support and an emulsion layer having a high sensitivity may be formed close to the support as described in J.P. KOKAI No. 57-112751, 62-200350, 62-206541 and 62-206543.

An example of the arrangement is a structure of a blue-sensitive layer having a low sensitivity (BL)/blue-sensitive layer having a high sensitivity (BH)/green-sensitive layer having a high sensitivity (GH)/green-sensitive layer having a low sensitivity (GL)/red-sensitive layer having a high sensitivity (RH)/red-sensitive layer having a low sensitivity (RL); BH/BL/GL/GH/RH/RL or BH/BL/GH/GL/RL/RH toward the support.

As described in J.P. KOKOKU No. 55-34932, the arrangement may be a blue-sensitive layer /GH/RH/GL/RL toward the support. Another arrangemnet is a blue-sensitive layer/GL/RL/GH/RH toward the support as described in J.P. KOKAI Nos. 56-25738 and 62-63936.

Another arrangement is that of three layers having sensitivities gradually lowered toward the support, i.e. a top layer (a silver halide emulsion layer having the highest sensitivity), middle layer (a silver halide emulsion layer having a lower sensitivity) and bottom layer (a silver halide emulsion layer having a sensitivity lower than that of the middle layer) as described in J.P. KOKOKU No. 49-15495. Even in such an arrangement, a sensitive layer may comprise further an emulsion layer having a medium sensitivity / emulsion layer having a high sensitivity / emulsion layer having a low sensitivity in the order toward the support as described in J.P. KOKAI No. 59-202464.

Still another arrangement is a structure of high-sensitivity emulsion layer / low-sensitivity emulsion layer / medium-sensitivity emulsion layer or low-sensitivity emulsion layer / medium-sensitivity emulsion layer / high-sensitivity emulsion layer.

When the photosensitive material comprises four or more layers, the arrangement of the layers may be varied as described above.

Thus the layer construction and the arrangement can be selected suitably for the use of the photosensitive material.

Although the amount of the silver halide used in the present invention is not particularly limited, it is preferably 3 to 10 g/$m^2$, more preferably 3 to 7 g/$m^2$ (in terms of silver).

Although the silver density based on the gelatin binder is also not particularly limited, silver is used in such an amount that the weight ratio of silver to gelatin will be in the range of 0.01 to 5.0 depending on the intended sensitivity of the emulsion layer.

Preferred silver halides contained in the photographic emulsion layers of the photosensitive material used in the present invention include silver bromoiodide, silver chloroiodide and silver chlorobromoiodide, which contain about 30 molar % or less of silver iodide. Particularly preferred is silver bromoiodide or silver chlorobromoiodide containing about 2 to 25 molar % of silver iodide.

The silver halide grains in the photographic emulsion may be in a regular crystal form such as a cubic, octahedral or tetradecahedral form; an irregular crystal form such as spherical or plate form; those having a crystal fault such as a twin plate; or a complex crystal form thereof.

The silver halide grain diameter may be not more than about 0.2 µm or the projection area diameter thereof may be about 10 µm or less. The emulsion may be either a polydisperse emulsion or monodisperse emulsion.

The silver halide photographic emulsion usable in the present invention can be prepared by processes described in, for example, 'Research Disclosure (RD)' No. 17643 (December, 1978), pages 22 to 23, '1. Emulsion Preparation and types'; RD No. 18716 (November, 1979), p. 648; P. Glafkides, 'Chemic et Phisique Photographique', Paul Montel, 1967; G.F. Duffin, 'Photographic Emulsion Chemistry' (Focal Press, 1966); and V.L. Zelikman et al., 'Making and Coating Photographic Emulsion', (Focal Press, 1964).

Monodisperse emulsions described in U.S. Patent Nos. 3,574,628 and 3,655,394 and British Patent No. 1,413,748 are also preferred.

Tabular grains having an aspect ratio of about 5 or higher are also usable. The tabular grains can be easily prepared by processes described in, for example, Gutoff, 'Photographic Science and Engineering', Vol. 14, pages 248 to 257 (1970); U.S. Patent Nos. 4,434,226, 4,414,310, 4,433,048 and 4,439,520 and British Patent No. 2,112,157.

The crystal structure of the grains in the above emulsion may be homogeneous; the grains may comprise an inside portion and an outside portion which are composed of silver halides different from each other; or the structure may be a laminated one. Different silver halide grains can be bonded together by an epitaxial bond or they can be bonded with a compound other than silver halides such as silver rhodanate or lead oxide.

A mixture of grains having various crystal forms can also be used.

The silver halide emulsion to be used in the present invention is usually physically and chemically ripened and spectrally sensitized. The additives to be used in these steps are shown in Research Disclosure Nos. 17643 and 18716. The portions in which the additives are mentioned in these two Research Disclosure's are summarized in the following table.

Known photographic additives are also mentioned in the two Research Disclosures and the corresponding portions are also shown in the following table.

| | Additive | RD 17643 | RD 18716 |
|---|---|---|---|
| 1 | Chemical sensitizer | p.23 | right column, p.648 |
| 2 | Sensitivity improver | | ditto |
| 3 | Spectral sensitizer Supersensitizer | pp.23 to 24 | right column, p.648 to right column, p.649 |
| 4 | Brightening agent | p.24 | |
| 5 | Antifoggant and stabilizer | pp.24 to 25 | right column, p.649 |
| 6 | Light absorber, filter dye and U.V. absorber | pp.25 to 26 | right column, p.649 to left column, p.650 |
| 7 | Antistaining agent | right column, p.25 | left and right columns, p.650 |
| 8 | Dye image stabilizer | p.26 | |
| 9 | Hardener | p.26 | left column, p.651 |
| 10 | Binder | p.26 | ditto |
| 11 | Plasticizer and lubricant | p.27 | right column, p.650 |
| 12 | Coating aid and surfactant | pp.26 and 27 | ditto |
| 13 | Antistatic agent | p.27 | diito |

To prevent the deterioration of the photographic properties by gaseous formaldehyde, it is preferred to add to the photosensitive material a compound capable of reacting with formaldehyde to fix it as described in U.S. Patent Nos. 4,411,987 and 4,435,503.

Various color couplers can be used in the present invention. Examples are given in patents described in the above-described Research Disclosure (RD) No. 17643, VII-C to G.

Preferred yellow couplers are those described in, for example, U.S. Patent Nos. 3,933,051, 4,022,620, 4,326,024, 4,401,752 and 4,248,961, J.P. KOKOKU No. 58-10739, British Patent Nos. 1,425,020 and 1,476,760, U.S. Patent Nos. 3,973,968, 4,314,023 and 4,511,649, and European Patent No. 249,473A.

The magenta couplers usable in the present invention are preferably 5-pyrazolone couplers and pyrazoloazole couplers. Particularly preferred are those described in U.S. Patent Nos. 4,310,619 and 4,351,897, European Patent No. 73,636, U.S. Patent Nos. 3,061,432 and 3,725,067, Research Disclosure No. 24220 (June, 1984), J.P. KOKAI No. 60-33552, Research Disclosure No. 24230 (June, 1984), J.P. KOKAI Nos. 60-43659, 61-72238, 60-35730, 55-118034 and 60-185951, U.S. Patent Nos. 4,500,630, 4,540,654 and 4,556,630, and WO (PCT) 88/04795.

The cyan couplers usable in the present invention are phenolic and naphtholic couplers. Preferred cyan couplers are those described in U.S. Patent Nos. 4,052,212, 4,146,396, 4,228,233, 4,296,200, 2,369,929, 2,801,171, 2,772,162, 2,895,826, 3,772,002, 3,758,308, 4,334,011 and 4,327,173, West German Patent Unexamined Published Application No. 3,329,729, European Patent Nos. 121,365A and 249,453A, U.S. Patent Nos. 3,446,622, 4,333,999, 4,775,616, 4,451,559, 4,427,767, 4,690,889, 4,254,212 and 4,296,199 and J.P. KOKAI No. 61-42658.

Colored couplers used for compensation for unnecessary absorption of the colored dye are preferably those described in Research Disclosure No. 17643, VII-G, U.S. Patent No. 4,163,670, J.P. KOKOKU No. 57-39413, U.S. Patent Nos. 4,004,929 and 4,138,258 and British Patent No. 1,146,368. It is also preferred to use couplers for compensation for unnecessary absorption of the colored dye with a fluorescent dye released in the coupling as described in U. S. Patent No. 4,774,181 or couplers having, as a split-off group, a dye precursor group capable of forming a dye by reaction with a developing agent as described in U.S. Patent No. 4,777,120.

The couplers capable of forming a color dye having a suitable diffusivity are preferably those described in U.S. Patent No. 4,366,237, British Patent No. 2,125,570, European Patent No. 96,570 and West German Patent No. 3,234,533.

Typical examples of the polymerized color-forming couplers are described in, for example, U.S. Patent Nos. 3,451,820, 4,080,211, 4,367,282, 4,409,320 and 4,576,910 and British Patent No. 2,102,173.

Further, couplers which release a photographically useful residual group during a coupling reaction are also preferably usable in the present invention. DIR couplers which release a development inhibitor are preferably those described in the patents shown in the above described RD 17643, VII-F as well as J.P. KOKAI No. 57-151944, 57-154234, 60-184248 and 63-37346 and U.S. Patent Nos. 4,248,962 and 4,782,012.

The couplers which release a nucleating agent or a development accelerator in the image-form are preferably those described in British Patent Nos. 2,097,140 and 2,131,188 and J.P. KOKAI Nos. 59-157638 and 59-170840.

Other couplers usable for the photosensitive material of the present invention include competing couplers described in U.S. Patent No. 4,130,427, polyequivalent couplers described in U.S. Patent Nos. 4,283,472, 4,338,393 and 4,310,618, DIR redox compound-releasing couplers, DIR coupler-releasing couplers, DIR coupler-releasing redox compounds and DIR redox-releasing redox compounds described in J.P. KOKAI Nos. 60-185950 and 62-24252, couplers which release a dye that restores the color after coupling-off described in European Patent No. 173,302A, bleach-accelerator-releasing couplers described in R.D. Nos. 11449 and 24241 and J.P. KOKAI No. 61-201247, ligand-releasing couplers described in U.S. Patent No. 4,553,477, and leuco dye-releasing couplers described in J.P. KOKAI No. 63-75747 and fluorescent dye-releasing couplers described in U.S. Patent No. 4,774,181.

The coupler used in the present invention can be incorporated into the photosensitive material by various known dispersion methods.

High-boiling solvents used for an oil-in-water dispersion method are described in, for example, U.S. Patent No. 2,322,027.

The high-boiling organic solvents having a boiling point under atmospheric pressure of at least 175 °C and usable in the oil-in-water dispersion method include, for example, phthalates [such as dibutyl phthalate, dicyclohexyl phthalate, di-2-ethylhexyl phthalate, decyl phthalate, bis(2,4-di-t-amylphenyl) phthalate, bis(2,4-di-t-amylphenyl) isophthalate and bis(1,1-diethylpropyl) phthalate], phosphates and phosphonates [such as triphenyl phosphate, tricresyl phosphate, 2-ethylhexyldiphenyl phosphate, tricyclohexyl phosphate, tri-2-ethylhexyl phosphate, tridecyl phosphate, tributoxyethyl phosphate, trichloropropyl phosphate and di-2-ethylhexylphenyl phosphate], benzoates [such as 2-ethylhexyl benzoate, dodecyl benzoate and 2-ethylhexyl-p-hydroxybenzoate], amides [such as N,N-diethyldodecaneamide, N,N-diethyllaurylamide and N-tetradecylpyrrolidone], alcohols and phenols [such as isostearyl alcohol and 2,4-di-tert-amylphenol], aliphatic carboxylates [such as bis(2-ethylhexyl) sebacate, dioctyl azelate, glycerol tributylate, isostearyl lactate and trioctyl citrate], aniline derivatives [such as N,N-dibutyl-2-butoxy-5-tert-octylaniline] and hydrocarbons [such as paraffin, dodecylbenzene and diisopropylnaphthalene]. Co-solvents usable in the present invention include, for example, organic solvents having a boiling point of at least about 30°C, preferably 50 to about 160°C. Typical examples include ethyl acetate, butyl acetate, ethyl propionate, methyl ethyl ketone, cyclohexanone, 2-ethoxyethyl acetate and dimethylformamide.

The steps and effects of the latex dispersion method and examples of the latices usable for the impregnation are described in, for example, U.S. Patent No. 4,199,363 and West German Patent Application (OLS) Nos. 2,541,274 and 2,541,230.

The present invention is applicable to various color photosensitive materials such as ordinary color negative films, cinema color negative films, reversal color films for slides or televisions, color papers, positive color films and reversal color papers.

Suitable supports usable in the present invention are described in, for example, on page 28 of the above-described RD. No. 17643 and from right column, page 647 to left column, page 648 of RD. No. 18716. The photographic film used in the present invention has a total thickness of the hydrophilic colloidal layers on the emulsion layer-side of 24 μm or less, preferably 20 μm or less and more preferably 18 μm or less and a film-swelling rate $T_{1/2}$ of preferably 30

sec or less, more preferably 20 sec or less. The thickness is determined at 25 °C and at a relative humidity of 55% (2 days). The film-swelling rate $T_{1/2}$ can be determined by a method known in this technical field. For example, it can be determined with a swellometer described on pages 124 to 129 of A. Green et al. 'Photogr. Sci. Eng.', Vol. 19, No. 2. $T_{1/2}$ is defined to be the time required for attaining the thickness if $T_{1/2}$ which is the saturated film thickness (corresponding to 90% of the maximum thickness of film swollen with the color developer at 30 °C for 3 min 15 sec.).

The film-swelling rate $T_{1/2}$ can be controlled by adding a hardener to gelatin used as the binder or by varying the time conditions after the coating. The swelling rate is preferably 150 to 400%. The swelling rate is calculated according to the following formula:

[(maximum swollen film thickness) - (film thickness)] / (film thickness)

wherein the maximum swollen film thickness is determined under the above-described conditions.

The color photographic film used in the present invention can be developed by an ordinary method described in, for example, the above-described R.D. No. 17643, pages 28 to 29 and R.D. No. 18716, page 615, left to the right columns.

When the photographic film used in the present invention is used in the form of a roll, it is preferably placed in a cartridge. The most ordinary cartridge is a current 135-format patrone. In addition, cartridges proposed in the following inventions are also usable: Japanese Utility Model Unexamined Published Application (hereinafter referred to as "J. UM. KOKAI") No. 58-67329, J.P. KOKAI Nos. 58-181035 and 58-182634, J.UM. KOKAI No. 58-195236, U.S. Patent No. 4,221,479, Japanese Patent Application Nos. 63-57785, 63-183344, 63-325638, 1-21862, 1-25362, 1-30246, 1-20222, 1-21863, 1-37181, 1-33108, 1-85198, 1-172595, 1-172594 and 1-172593, and U.S. Patent Nos. 4,846,418, 4,848,693 and 4,832,275.

Eample 1

Production of color photographic film:

A multi-layered color photographic film (Sample 101) composed of layers of the following compositions formed on a primed cellulose triacetate film support having a thickness of 120 µm was prepared.

(Compositions of the photosensitive layers)

The numerals for the components each show the amount of the coating (g/m$^2$). The amounts of the silver halides are given in terms of silver applied. The amount of the sensitizing dye is shown in terms of the molar number thereof per mol of the silver halide contained in the same layer.

(Sample 101)

The first layer (antihalation layer):

| | |
|---|---|
| black colloidal silver silver | 0.18 |
| gelatin | 1.40 |

The second layer (intermediate layer):

| | |
|---|---|
| 2,5-di-t-pentadecylhydroquinone | 0.18 |
| EX-1 | 0.070 |
| EX-3 | 0.020 |
| EX-12 | 2.0 x $10^{-3}$ |
| U-1 | 0.060 |
| U-2 | 0.080 |
| U-3 | 0.10 |
| HBS-1 | 0.10 |
| HBS-2 | 0.020 |

(continued)

| | |
|---|---|
| gelatin | 1.04 |

The third layer (the first red-sensitive emulsion layer)

| | | |
|---|---|---|
| Emulsion A | silver | 0.25 |
| Emulsion B | silver | 0.25 |
| Sensitizing Dye I | | $6.9 \times 10^{-5}$ |
| Sensitizing Dye II | | $1.8 \times 10^{-5}$ |
| Sensitizing Dye III | | $3.1 \times 10^{-4}$ |
| EX-2 | | 0.34 |
| EX-10 | | 0.020 |
| U-1 | | 0.070 |
| U-2 | | 0.050 |
| U-3 | | 0.070 |
| HBS-1 | | 0.060 |
| gelatin | | 0.87 |

The fourth layer (the second red-sensitive emulsion layer)

| | |
|---|---|
| Emulsion G silver | 1.00 |
| Sensitizing Dye I | $5.1 \times 10^{-5}$ |
| Sensitizing Dye II | $1.4 \times 10^{-5}$ |
| Sensitizing Dye III | $2.3 \times 10^{-4}$ |
| EX-2 | 0.40 |
| EX-3 | 0.050 |
| EX-10 | 0.015 |
| U-1 | 0.070 |
| U-2 | 0.050 |
| U-3 | 0.070 |
| gelatin | 1.30 |

The fifth layer (the third red-sensitive emulsion layer)

| | |
|---|---|
| Emulsion D silver | 1.60 |
| Sensitizing Dye I | $5.4 \times 10^{-5}$ |
| Sensitizing Dye II | $1.4 \times 10^{-5}$ |
| Sensitizing Dye III | $2.4 \times 10^{-4}$ |

(continued)

| | |
|---|---|
| EX-2 | 0.097 |
| EX-3 | 0.010 |
| EX-4 | 0.080 |
| HBS-1 | 0.22 |
| HBS-2 | 0.10 |
| gelatin | 1.63 |

The sixth layer (intermediate layer)

| | |
|---|---|
| EX-5 | 0.040 |
| HBS-1 | 0.020 |
| gelatin | 0.80 |

The seventh layer (the first green-sensitive emulsion layer)

| | |
|---|---|
| Emulsion A silver | 0.15 |
| Emulsion B silver | 0.15 |
| Sensitizing Dye IV | $3.0 \times 10^{-5}$ |
| Sensitizing Dye V | $1.0 \times 10^{-4}$ |
| Sensitizing Dye VI | $3.8 \times 10^{-4}$ |
| EX-1 | 0.021 |
| EX-6 | 0.26 |
| EX-7 | 0.030 |
| EX-8 | 0.025 |
| HBS-1 | 0.10 |
| HBS-3 | 0.010 |
| gelatin | 0.63 |

The eighth layer (the second green-sensitive emulsion layer)

| | |
|---|---|
| Emulsion C silver | 0.45 |
| Sensitizing Dye IV | $2.1 \times 10^{-5}$ |
| Sensitizing Dye V | $7.0 \times 10^{-5}$ |
| Sensitizing Dye VI | $2.6 \times 10^{-4}$ |
| EX-6 | 0.094 |
| EX-7 | 0.026 |
| EX-8 | 0.018 |
| HBS-1 | 0.16 |
| HBS-3 | $8.0 \times 10^{-3}$ |
| gelatin | 0.50 |

The ninth layer (the third green-sensitive emulsion layer)

| | |
|---|---|
| Emulsion E silver | 1.20 |
| Sensitizing Dye IV | $3.5 \times 10^{-5}$ |
| Sensitizing Dye V | $8.0 \times 10^{-5}$ |
| Sensitizing Dye VI | $3.0 \times 10^{-4}$ |
| EX-1 | 0.05 |
| EX-11 | 0.10 |
| EX-13 | 0.015 |
| HBS-1 | 0.25 |
| HBS-2 | 0.10 |
| gelatin | 1.54 |

The tenth layer (yellow filter layer)

| | |
|---|---|
| yellow colloidal silver silver | 0.050 |
| EX-5 | 0.080 |
| HBS-1 | 0.030 |
| gelatin | 0.95 |

The eleventh layer (the first blue-sensitive emulsion layer)

| | |
|---|---|
| Emulsion A silver | 0.080 |
| Emulsion B silver | 0.070 |
| Emulsion F silver | 0.070 |
| Sensitizing Dye VII | $3.5 \times 10^{-4}$ |
| EX-8 | 0.042 |
| EX-9 | 0.72 |
| HBS-1 | 0.28 |
| gelatin | 1.10 |

The twelfth layer (the second blue-sensitive emulsion layer)

| | |
|---|---|
| Emulsion G silver | 0.45 |
| Sensitizing Dye VII | $2.1 \times 10^{-4}$ |
| EX-9 | 0.15 |
| EX-10 | $7.0 \times 10^{-3}$ |
| HBS-1 | 0.050 |
| gelatin | 0.78 |

The thirteenth layer (the third blue-sensitive emulsion layer)

| | |
|---|---|
| Emulsion H silver | 0.77 |
| Sensitizing Dye VII | $2.2 \times 10^{-4}$ |
| EX-9 | 0.20 |
| HBS-1 | 0.070 |
| gelatin | 0.69 |

The fourteenth layer (the first protective layer)

| | |
|---|---|
| Emulsion I silver | 0.20 |
| U-4 | 0.11 |
| U-5 | 0.17 |
| HBS-1 | $5.0 \times 10^{-2}$ |
| gelatin | 1.00 |

The fifteenth layer (the second protective layer)

| | |
|---|---|
| H-1 | 0.40 |
| B-1 (diameter: 1.7 µm) | $5.0 \times 10^{-2}$ |
| B-2 (diameter: 1.7 µm) | 0.10 |
| B-3 | 0.10 |
| S-1 | 0.20 |
| gelatin | 1.20 |

Further, W-1, W-2, W-3, B-4, B-5 and F-1 as well as an iron salt, lead salt, gold salt, platinum salt, iridium salt and rhodium salt were incorporated into all the layers in order to prevent the processability, pressure resistance, mildew resistance, antimicrobial properties, antistatic properties and spreadability.

| | Average AgI content(%) | Mean particle diameter($\mu$m) | Deviation on the particle diameters(%) | Ratio of diameter to thickness | Silver ratio (AgI ratio %) |
|---|---|---|---|---|---|
| Emulsion A | 4.0 | 0.45 | 27 | 1 | core/shell=1/3(13/1)、double structural particle |
| Emulsion B | 8.9 | 0.70 | 14 | 1 | core/shell=3/7(25/2)、double structural particle |
| Emulsion C | 10 | 0.70 | 30 | 2 | core/shell=1/2(24/3)、double structural particle |
| Emulsion D | 16 | 1.05 | 35 | 2 | core/shell=4/6(40/0)、double structural particle |
| Emulsion E | 10 | 1.00 | 35 | 3 | core/shell=1/2(24/3)、double structural particle |
| Emulsion F | 4.0 | 0.25 | 28 | 1 | core/shell=1/3(13/1)、double structural particle |
| Emulsion G | 14.0 | 0.75 | 25 | 2 | core/shell=1/2(42/0)、double structural particle |
| Emulsion H | 14.5 | 1.30 | 25 | 3 | core/shell=37/63(34/3)、double structural particle |
| Emulsion I | 1 | 0.07 | 15 | 1 | uniform particle |

EX − 1

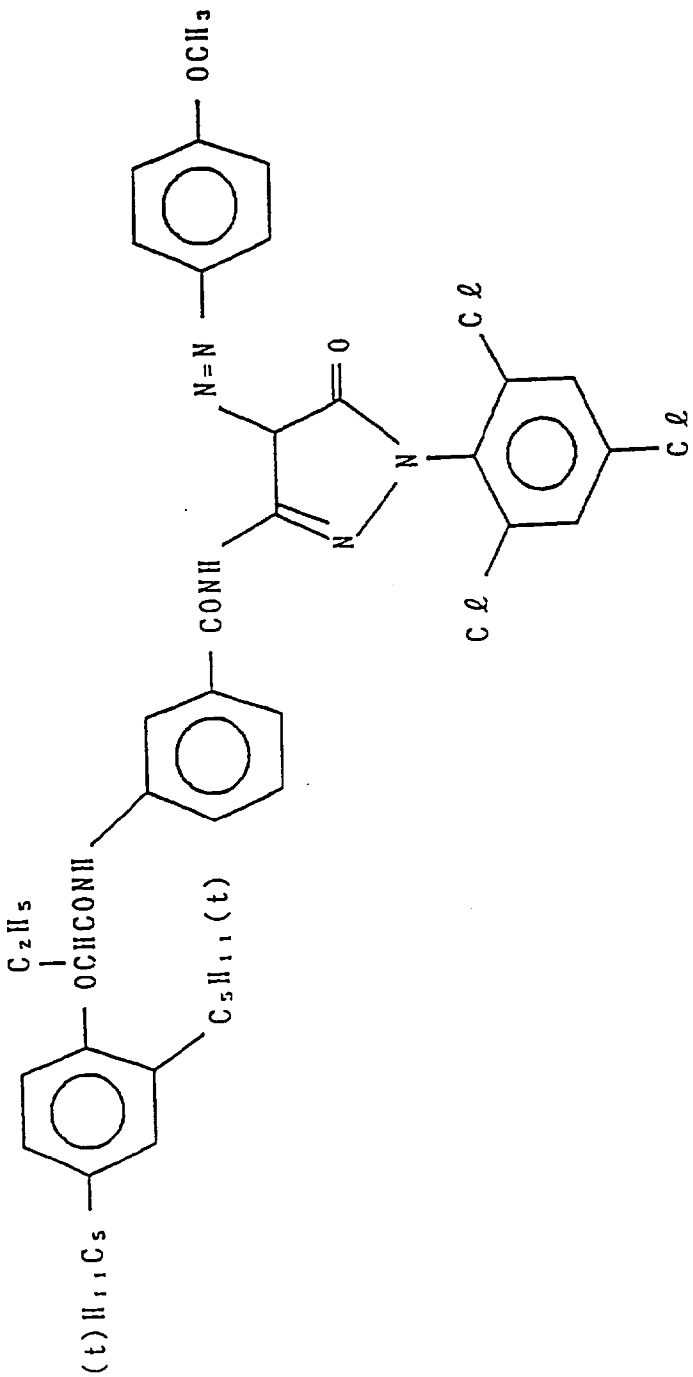

EX-2

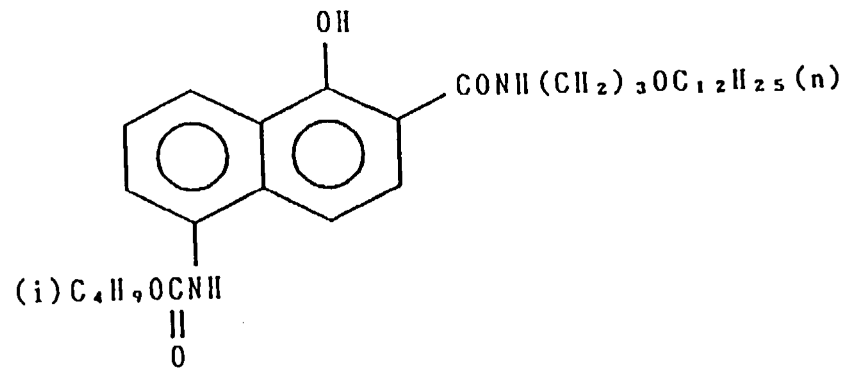

EX-3

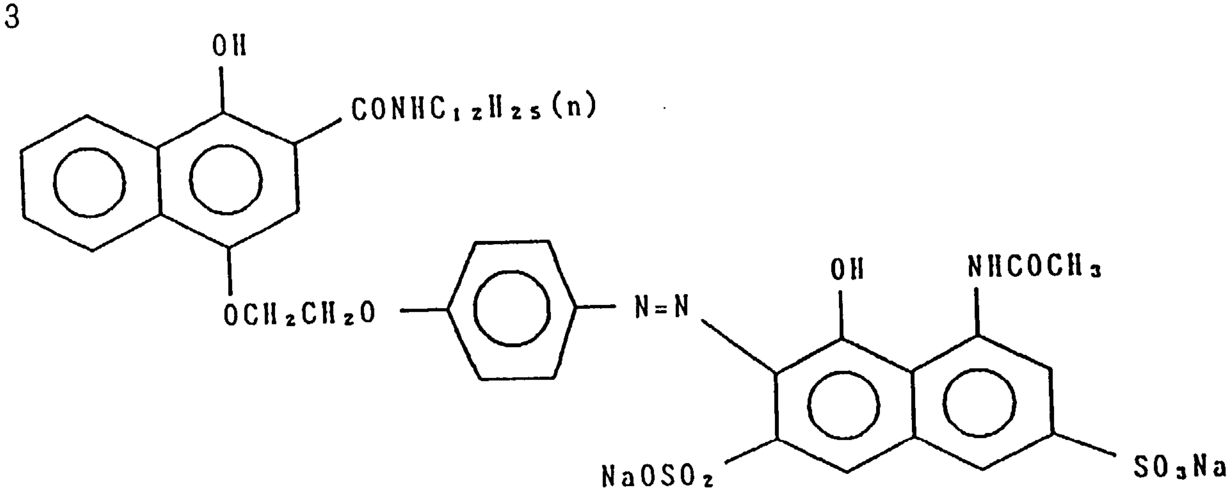

EX－4

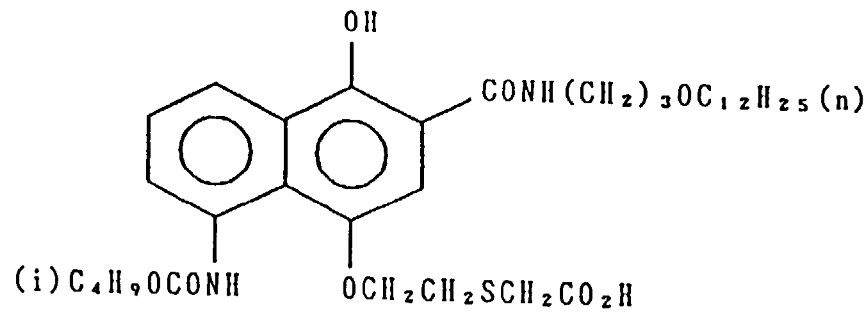

EX－5

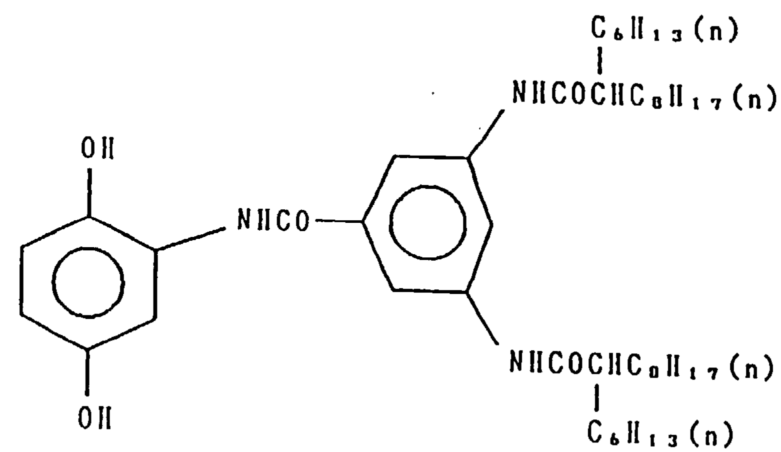

EX - 6

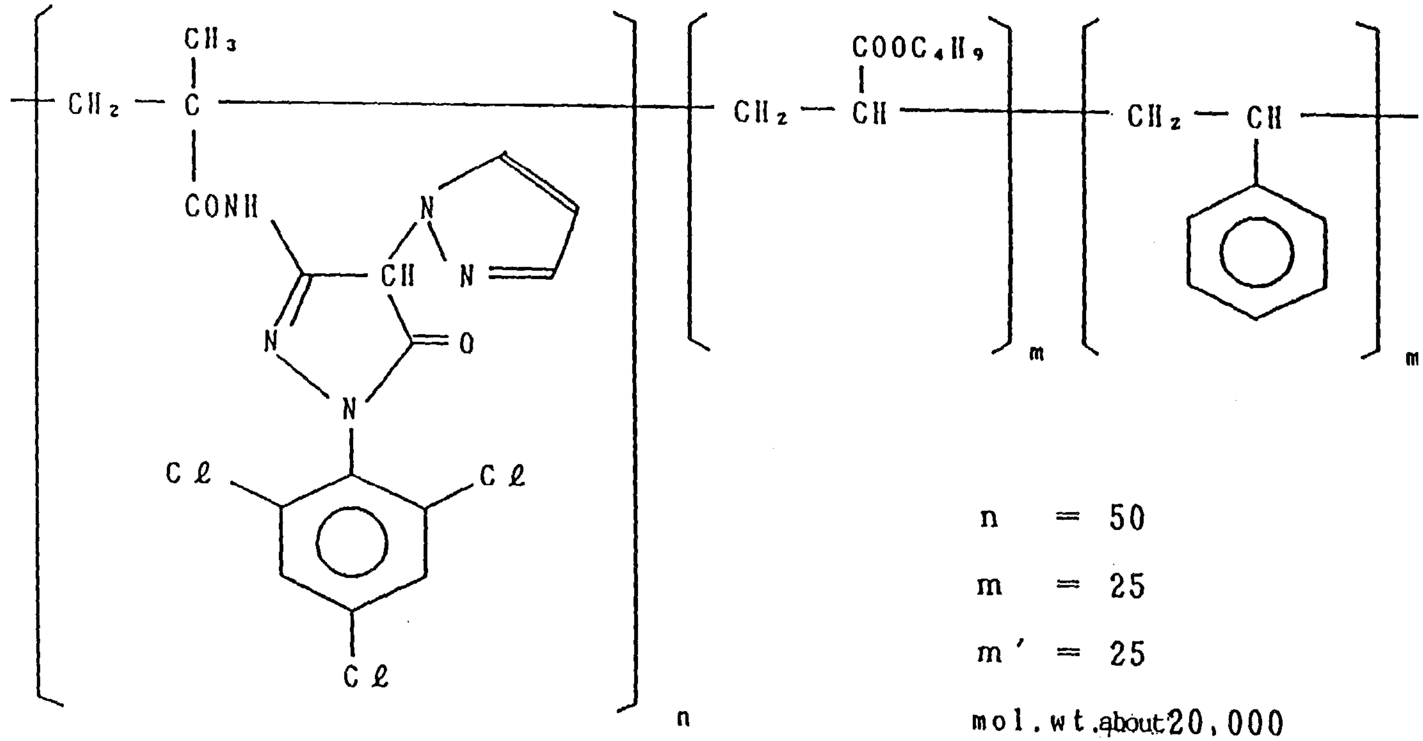

n = 50

m = 25

m' = 25

mol. wt. about 20,000

EX − 7

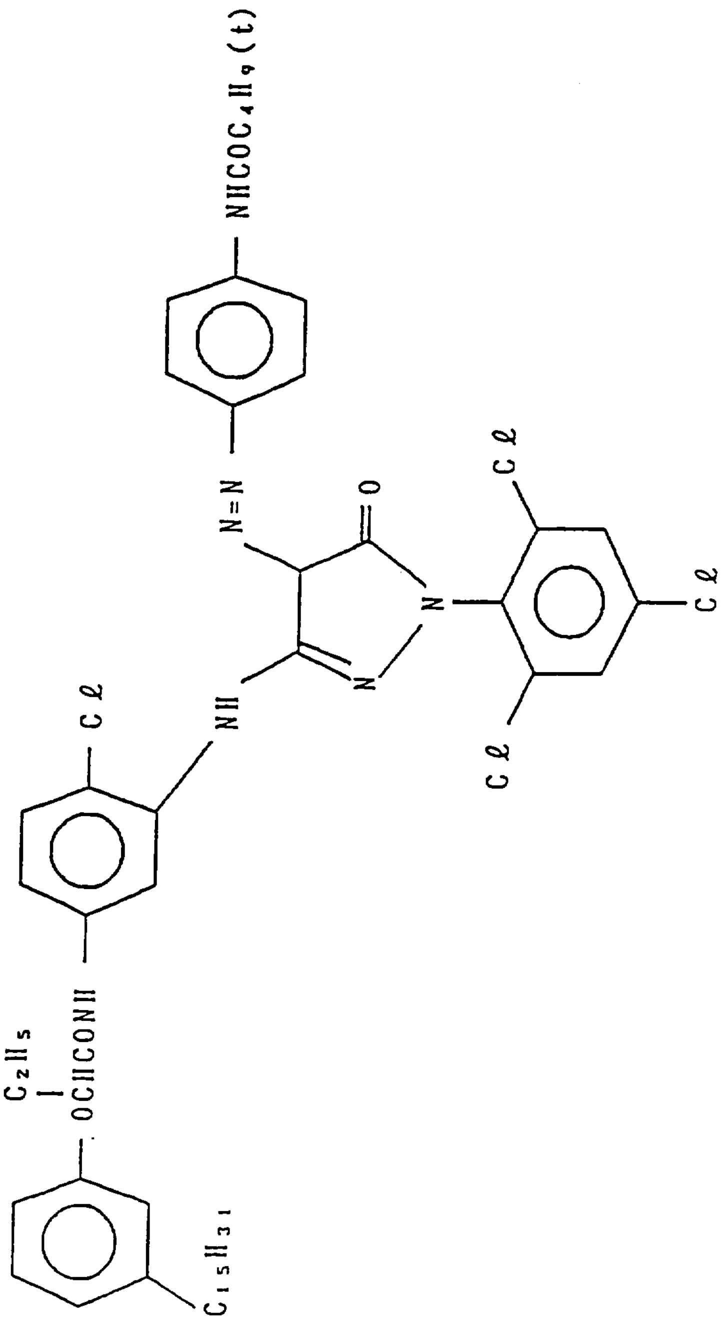

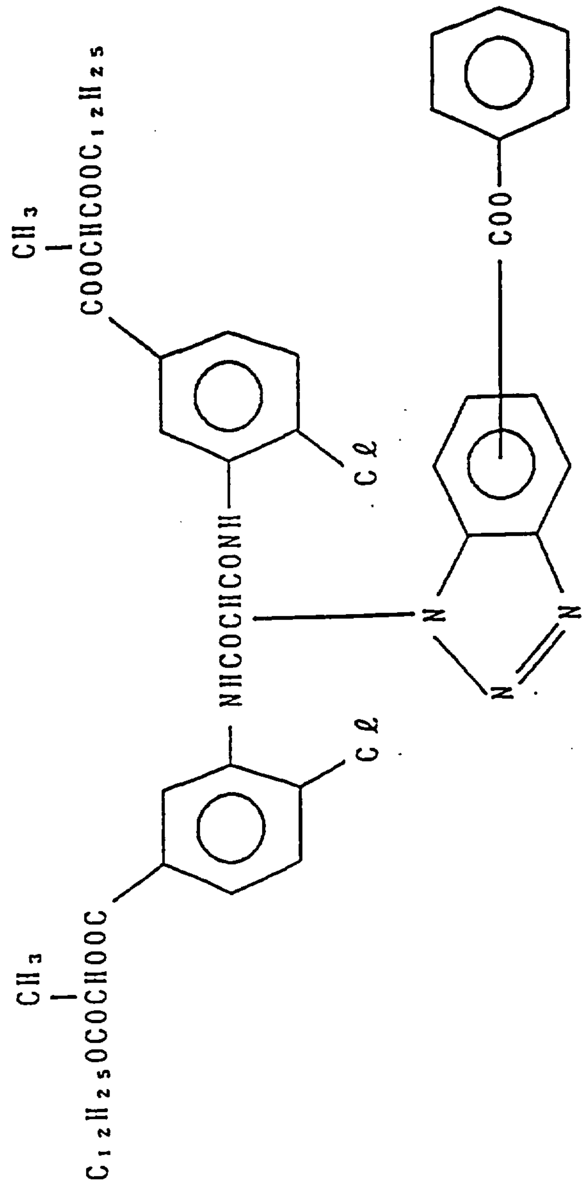

EX-8

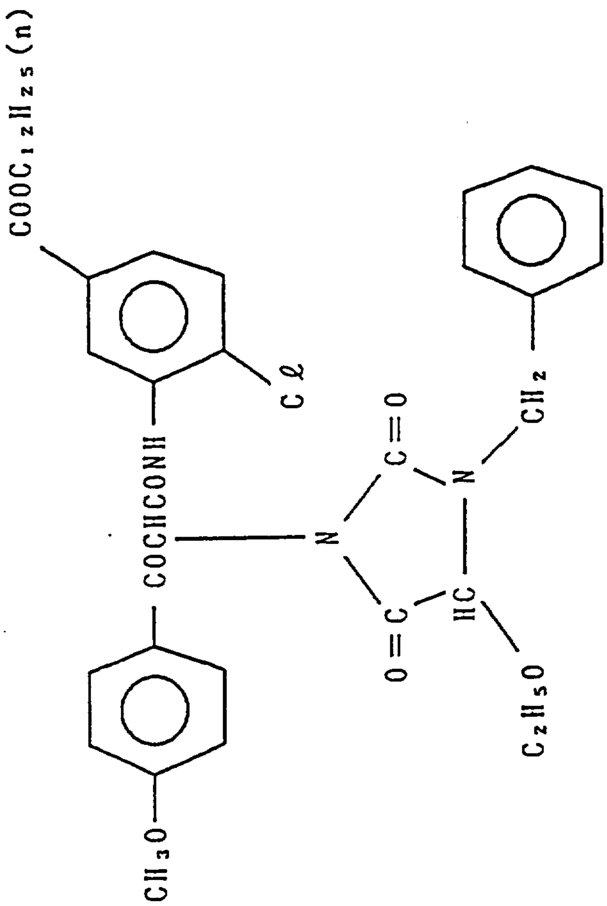

EX－9

EX－10

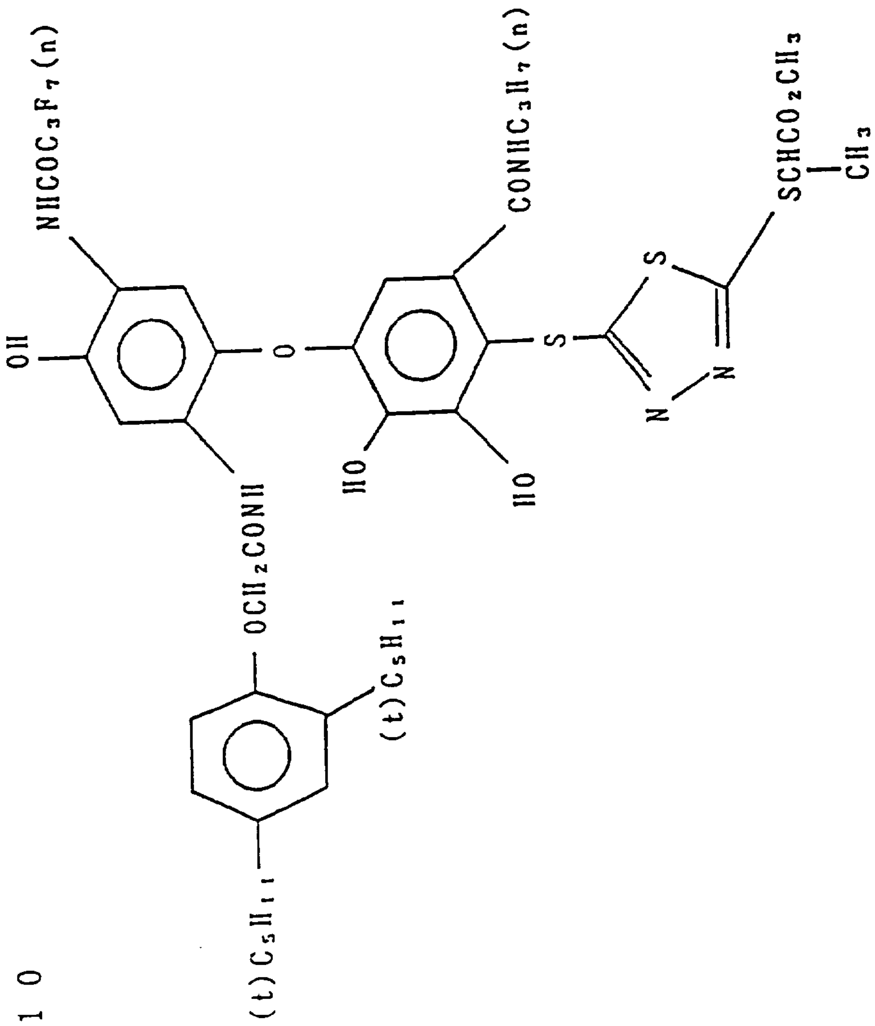

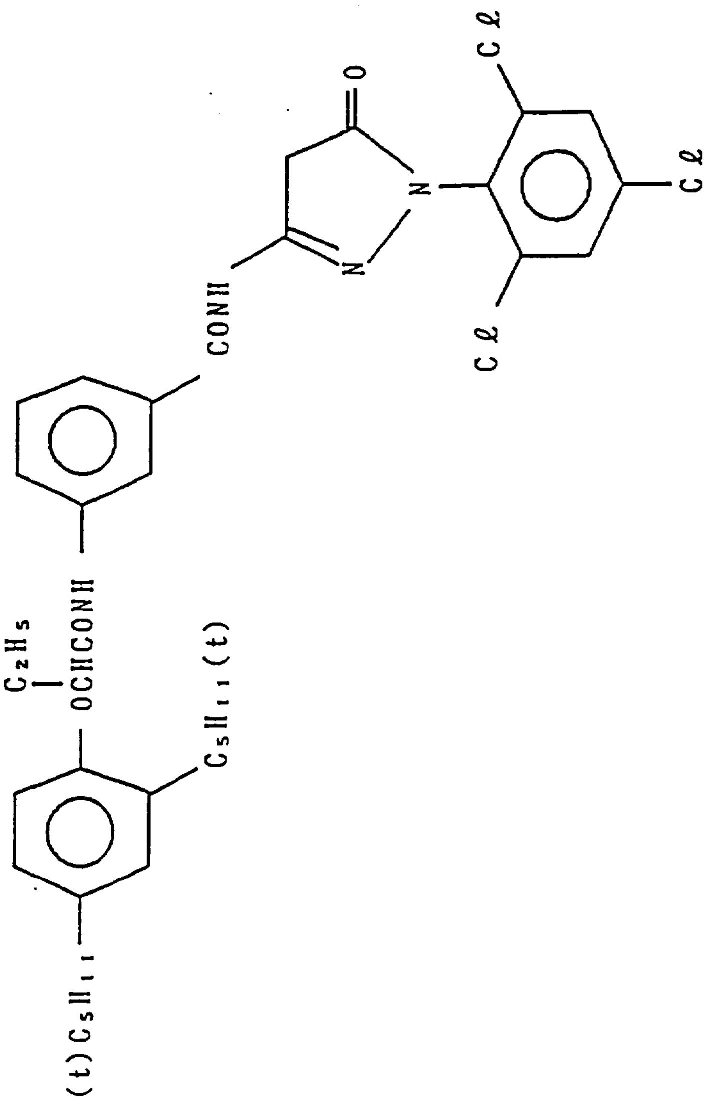

EX－11

EX-12

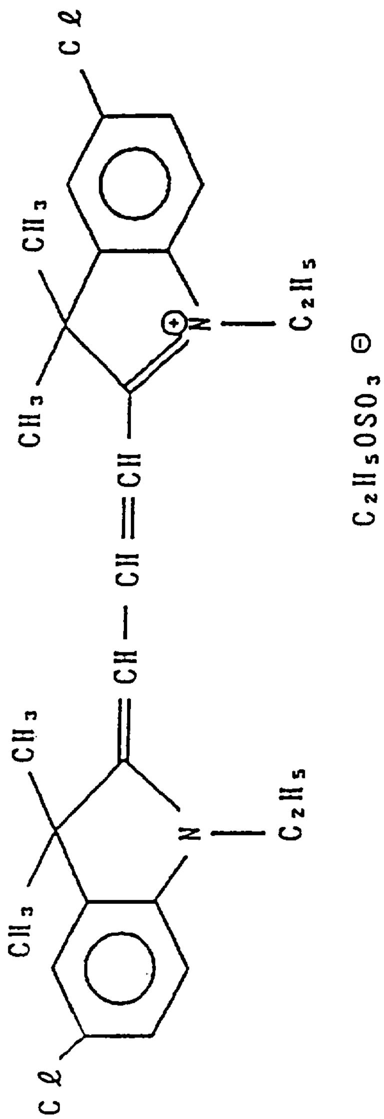

EX-13

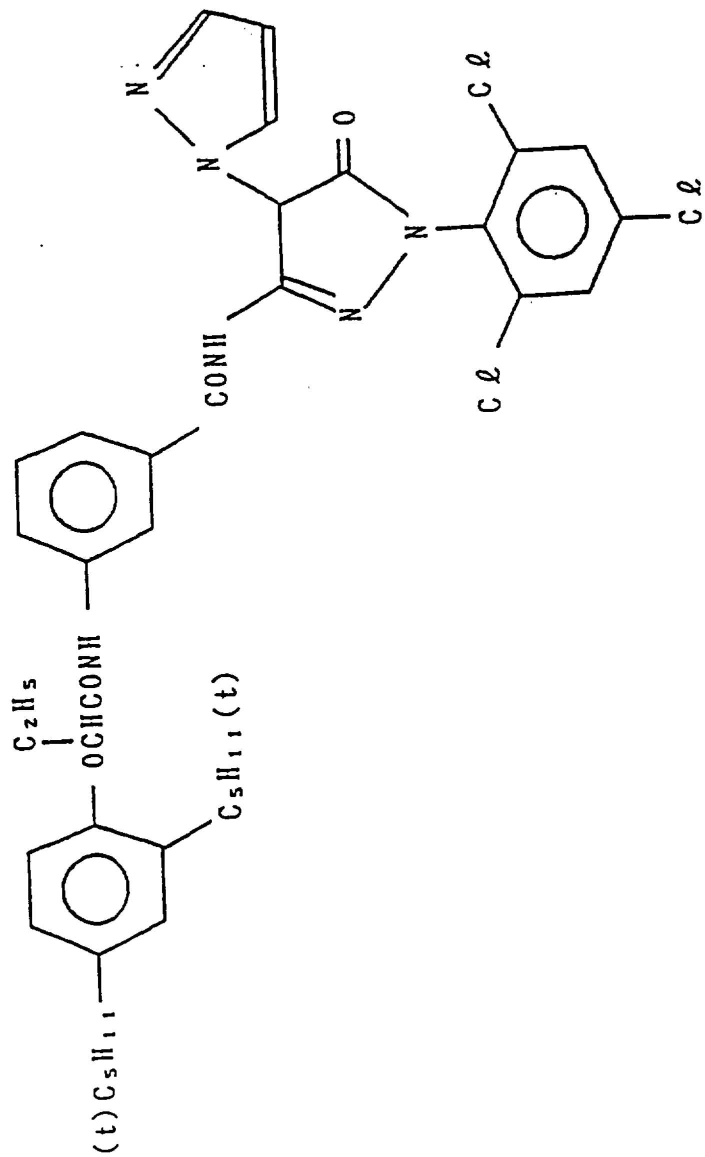

U — 1

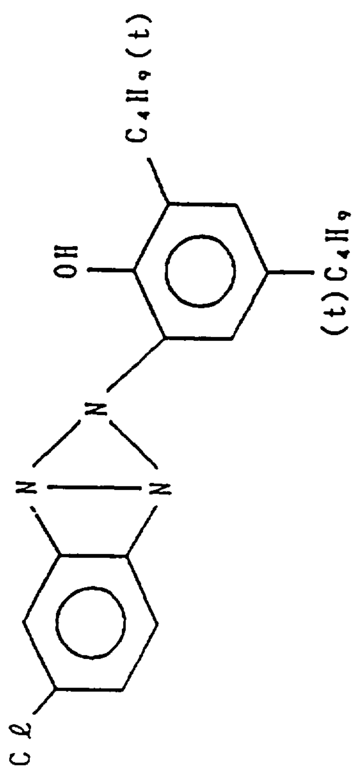

U — 2

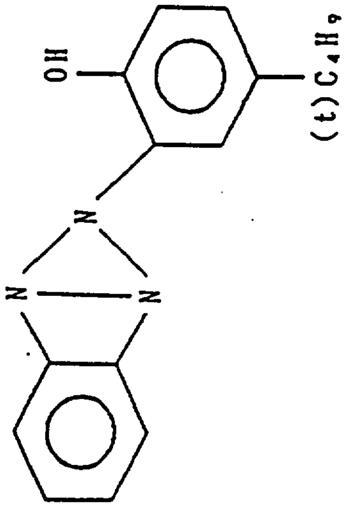

U — 3

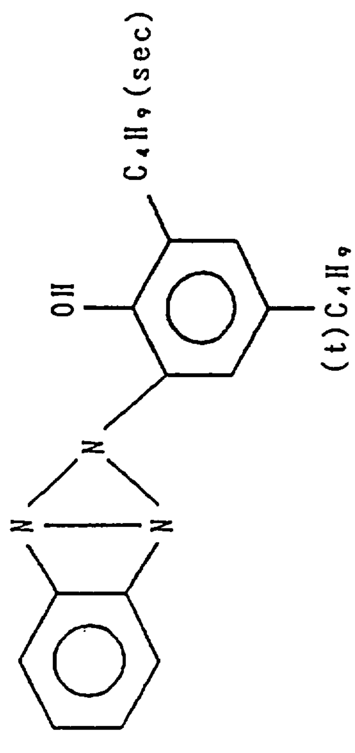

U − 4

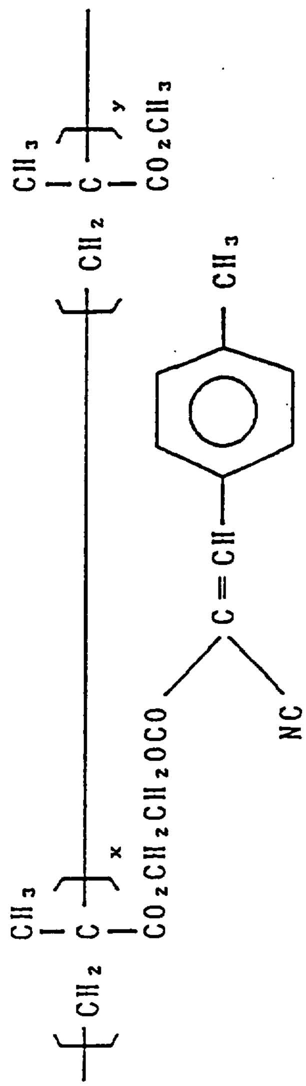

x : y = 70:30 (wt%)

U − 5

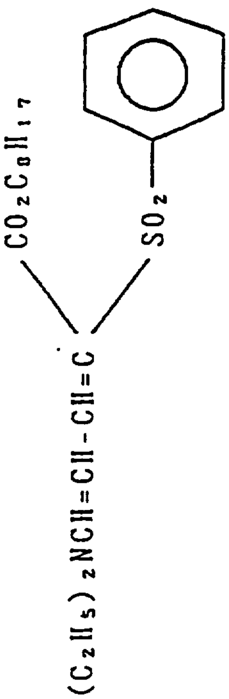

HBS-1 Tricresyl phosphate

HBS-2 Di-n-butyl phthalate

HBS-3

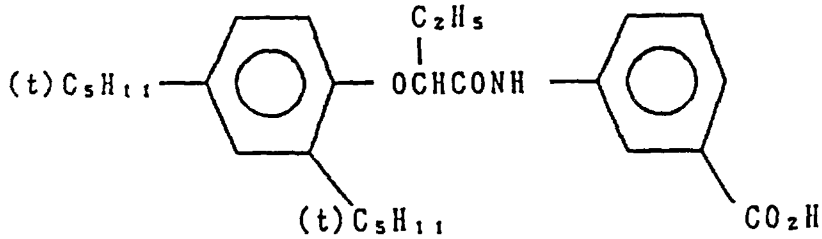

Sensitizing Dye I

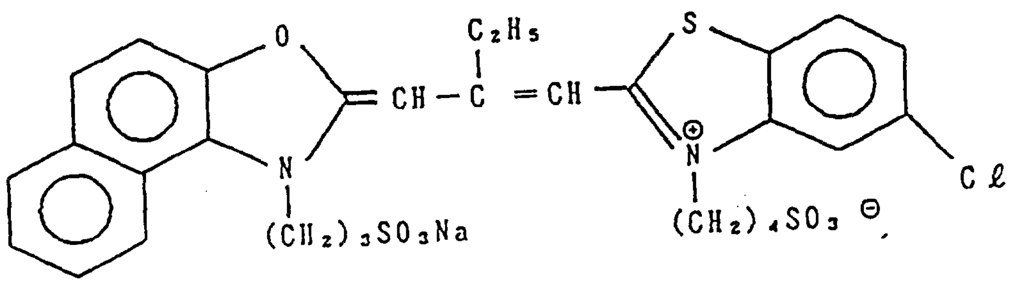

Sensitizing Dye II

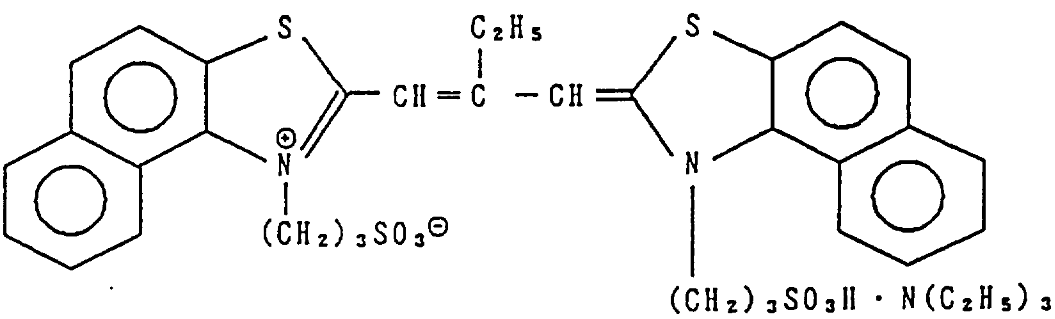

Sensitizing Dye III

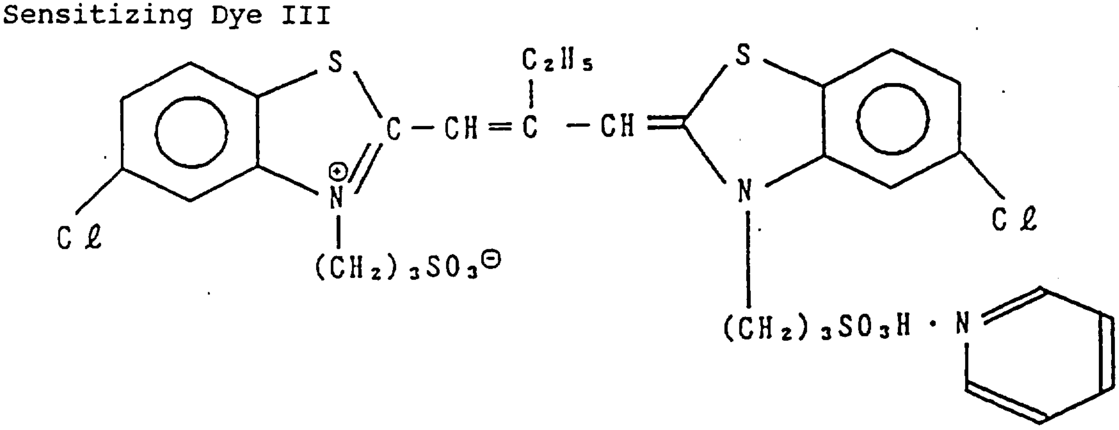

Sensitizing Dye IV

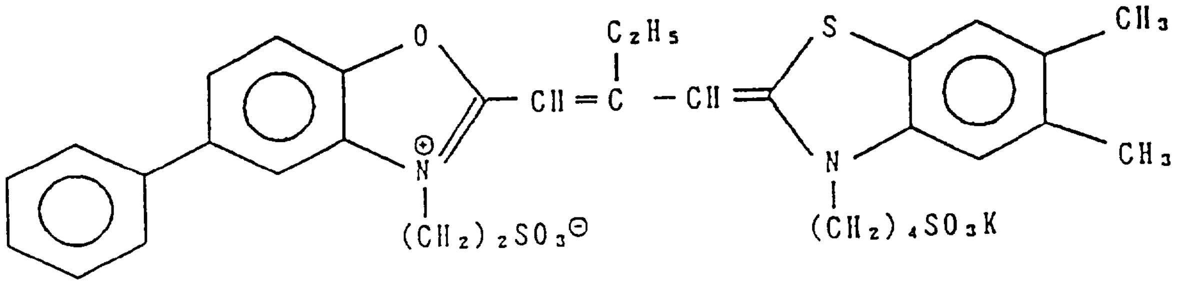

Sensitizing Dye V

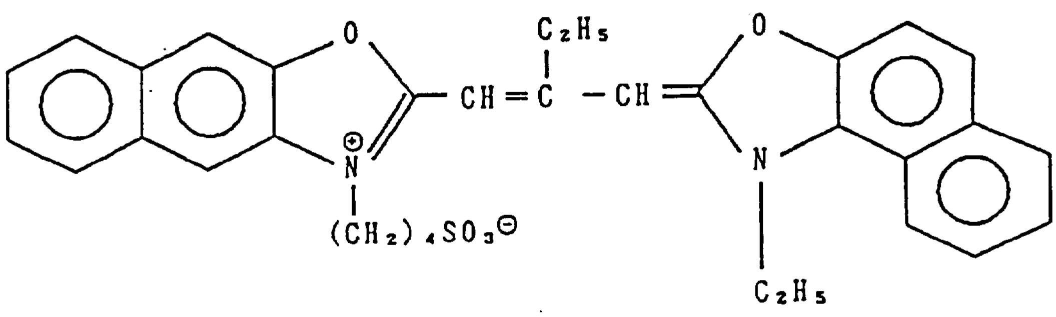

Sensitizing Dye VI

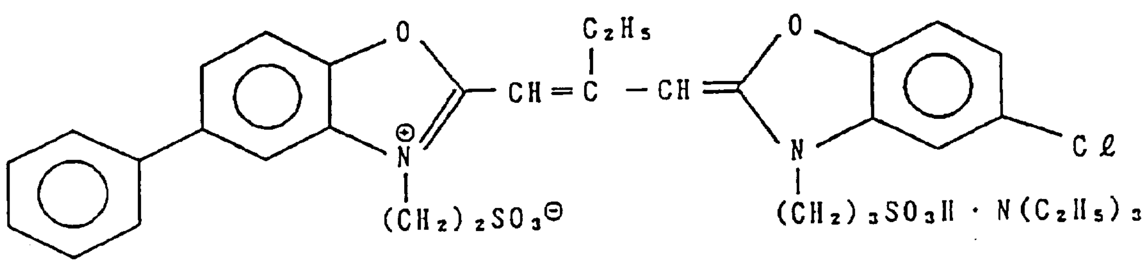

Sensitizing Dye VII

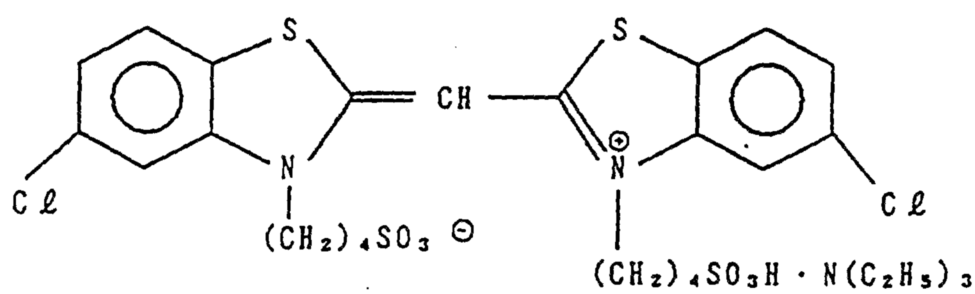

S - 1

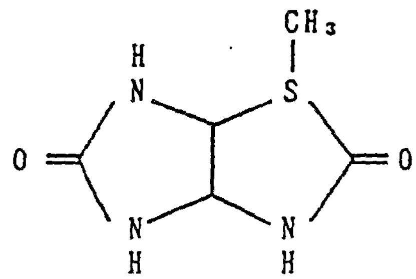

H - 1

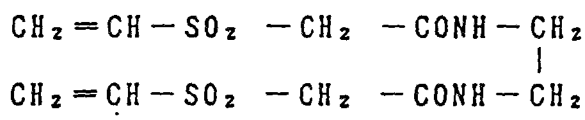

B - 1

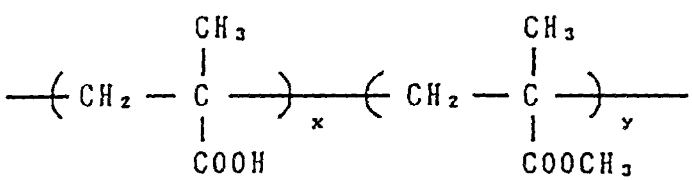

x/y=10/90

B - 2

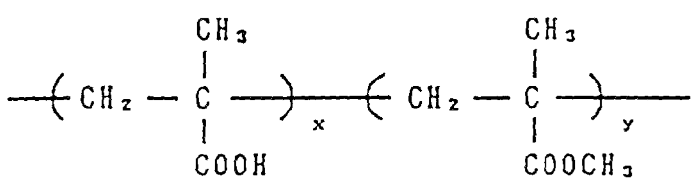

x/y=40/60

B - 3

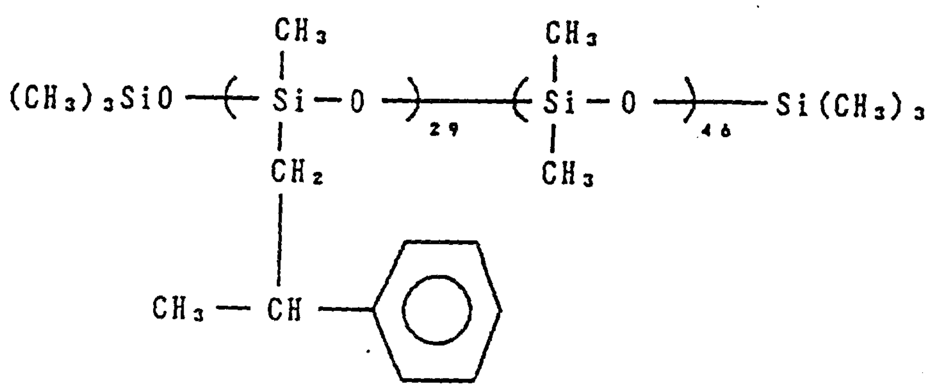

B − 4

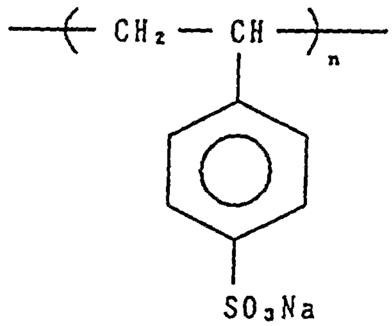

B − 5

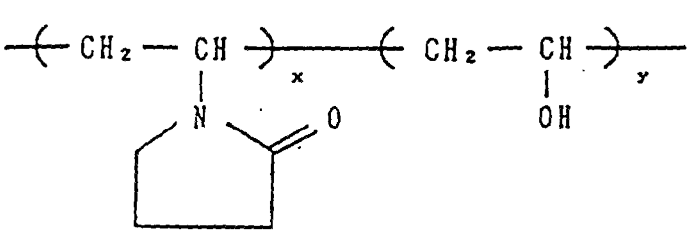

x/y=70/30

W − 1

$C_8H_{17}SO_2NHCH_2CH_2CH_2OCH_2CH_2\overset{\oplus}{N}(CH_3)_3$

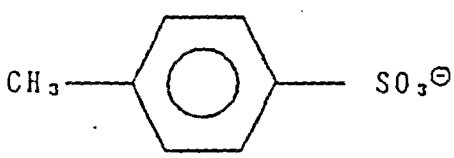

W − 2

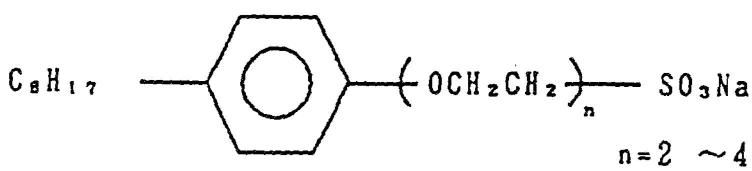

n=2 ∼4

W − 3

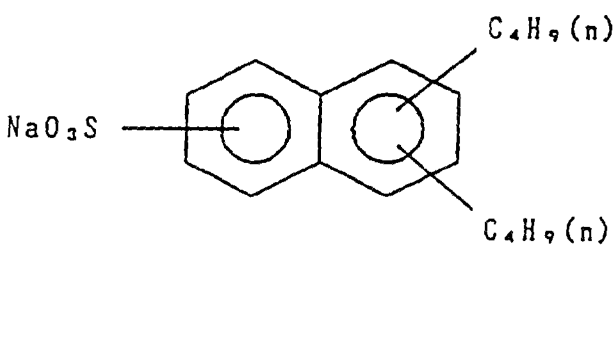

F - 1

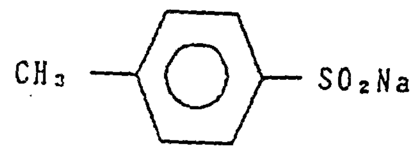

F - 2

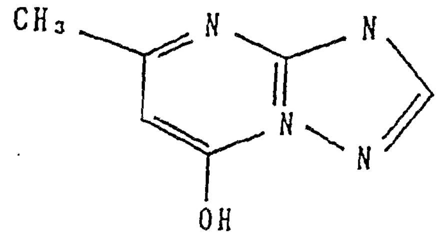

Samples 102 to 109 were prepared in the same manner as that of the preparation of Sample 101 except that the variety and amount of the fog inhibitor were altered as shown in Table 2.

The thickness of the hydrophilic colloid layer of Samples 101 to 109 was 21.0 μm.

Preparation of film cartridge:

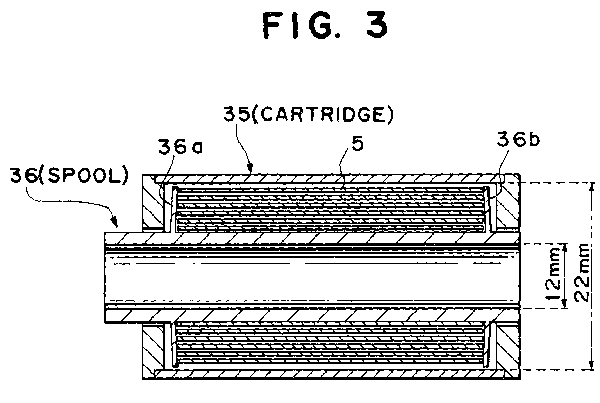

Samples 101 to 109 were left to stand at 25 °C at a relative humidity of 65 % for one week and then cut to form slits having a width of 35 mm under the same temperature and humidity conditions as above. The slits were cut to a length of 130 cm and each slit was rolled in a cartridge shown in Fig. 3 to form Samples A-101 to A-109, respectively.

Samples B-101 to B-109 were prepared in the same manner as described above except that the length of the films in Samples A-101 to A-109 were altered to 145 cm. Samples C-101 to C-109 were prepared in the same manner as described above except that the length of the films were altered to 150 cm. Samples D-101 to D-109 having the film length of 160 cm were prepared in the same manner as above. Although it was tried to roll longer films, the friction in the cartridge was increased to also increase the sending stress.

The void volumes V of the respective samples are summarized in Table 1.

A test of sending out the film from the cartridge was conducted wherein the spool of each sample was rotated reversely to the winding direction of the film. The results are shown in Table 1. It is apparent from table 1 that unless the void volume V is reduced to 0.25 or less, the film cannot be stably sent out. The reliability of the sending-out of the film was further increased when V was reduced to 0.22 or less, particularly 0.18 or less.

Table 1

| Sample No. | Size of film | | void volume V | Sending-out of film from cartridge |
|---|---|---|---|---|
| | Thickness (mm) | Length (mm) | | |
| A-101 to A-109 | 0.141 | 1300 | 0.286 | Bad (The film occasionally reversed to make the sending-out thereof impossible) |
| B-101 to B-109 | 0.141 | 1450 | 0.234 | Good (However, when the motor rotation rate was increased, the film reversed to make the sending-out of the film impossible) |
| C-101 to C-109 | 0.141 | 1500 | 0.208 | Good (However, when the motor rotation rate was increased, the film reversed very rarely) |
| D-101 to D-109 | 0.141 | 1600 | 0.155 | Good (In the tests, no trouble of sending-out was caused) |

Test on storability of film cartridge:

Samples A-101 to 109 and D-101 to 109 were kept at 60 °C for 3 days or at room temperature. They were subjected to sensitometric exposure (4800 ° K, 1/100 sec, 2CMS) and then to color development by process A.

Each of the samples thus processed was subjected to the sensitometry with a green filter to obtain $D_{min}$ and sensitivity as shown in Table 2. In Table 2, the sensitivity is given in terms of the absolute value of a reciprocal of an exposure value necessitated for obtaining a density corresponding to ($D_{min}$ + 0.2). $D_{min}$ represents the density of non-exposed parts.

It is apparent from Table 2 that when the antifoggant used in the present invention is employed, the fog caused when the void volume is reduced and the photographic film is stored at a high temperature can be minimized.

Namely, by the effect of the present invention, the preparation of a film cartridge containing a photographic film

with a small cartridge which is capable of surely sending out the film is made possible.

The effect of the present invention was exhibited also in the process B.

Table 2

| | Void volume V | Sending-out of film | Fog Inhibitor | | Photographic properties | | | | Difference in $D_{min}$ between film stored at 60 C and film stored at room temp. |
|---|---|---|---|---|---|---|---|---|---|
| | | | Variety | Amount (mol/mol-AGX) | Stored at room temp. | | Stored at 60 °C | | |
| | | | | | Sensitivity | $D_{min}$ | Sensitivity | $D_{min}$ | |
| A-101 (Comp. Ex.) | 0.286 | Bad | None | — | 100 | 0.66 | 94 | 0.84 | 0.18 |
| A-102 (ditto) | 〃 | ditto | F-2 | $3x10^{-4}$ | 103 | 0.64 | 96 | 0.80 | 0.16 |
| A-103 (ditto) | 〃 | ditto | IV-13 | 〃 | 99 | 0.64 | 96 | 0.77 | 0.13 |
| A-104 (ditto) | 〃 | ditto | III-1 | 〃 | 99 | 0.64 | 96 | 0.77 | 0.13 |
| A-105 (ditto) | 〃 | ditto | II-4 | 〃 | 100 | 0.65 | 96 | 0.77 | 0.12 |
| A-106 (ditto) | 〃 | ditto | I-1 | 〃 | 98 | 0.62 | 96 | 0.70 | 0.08 |
| A-107 (ditto) | 〃 | ditto | I-3 | 〃 | 102 | 0.63 | 100 | 0.72 | 0.09 |
| A-108 (ditto) | 〃 | ditto | I-55 | 〃 | 103 | 0.64 | 101 | 0.74 | 0.10 |
| A-109 (ditto) | 〃 | ditto | I-45 | 〃 | 104 | 0.64 | 101 | 0.74 | 0.10 |
| D-101 (ditto) | 0.155 | Good | None | — | 100 | 0.66 | 90 | 0.91 | 0.25 |
| D-102 (ditto) | 〃 | ditto | F-2 | $3x10^{-4}$ | 103 | 0.64 | 93 | 0.86 | 0.22 |
| D-103 (ditto) | 〃 | ditto | IV-13 | 〃 | 99 | 0.64 | 95 | 0.80 | 0.16 |
| D-104 (ditto) | 〃 | ditto | III-1 | 〃 | 99 | 0.64 | 95 | 0.80 | 0.16 |
| D-105 (ditto) | 〃 | ditto | II-4 | 〃 | 100 | 0.65 | 95 | 0.80 | 0.15 |
| D-106 (ditto) | 〃 | ditto | I-1 | 〃 | 98 | 0.62 | 96 | 0.71 | 0.09 |
| D-107 (ditto) | 〃 | ditto | I-3 | 〃 | 102 | 0.63 | 100 | 0.73 | 0.10 |
| D-108 (present invention) | 〃 | ditto | I-55 | 〃 | 103 | 0.64 | 100 | 0.74 | 0.11 |
| D-109 (present invention) | 〃 | ditto | I-45 | 〃 | 104 | 0.64 | 101 | 0.75 | 0.11 |

Compounds I-1, I-3, II-4, III-1 and IV-13 are as follows:

(I－1)

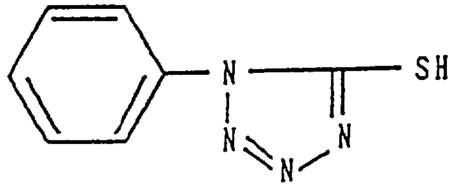

(I－3)

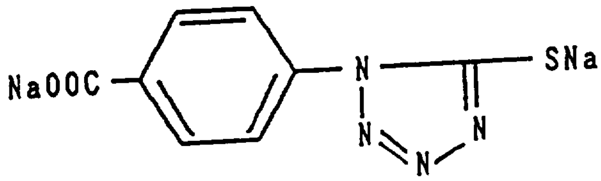

(II－4)

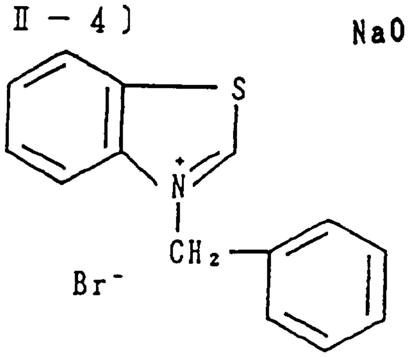

(III－1)

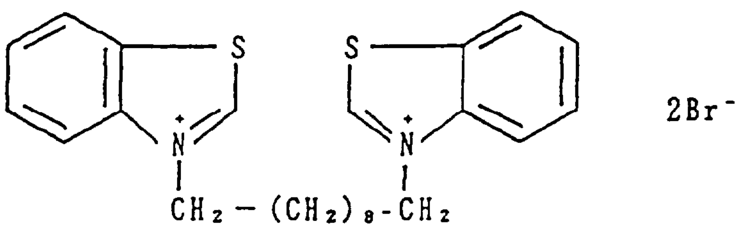

(IV－13)

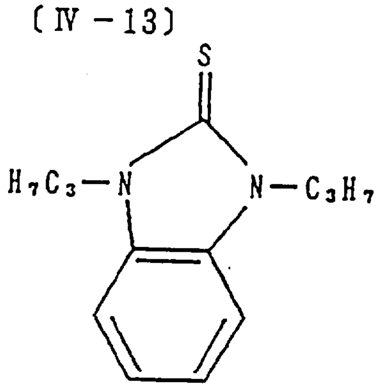

| < Process A > | | | | |
|---|---|---|---|---|
| Step | Time | Temp. | Amount of replenisher | Capacity of tank |
| Color development | 3 min 15 sec | 38 °C | 33 ml | 20 l |
| Bleaching | 6 min 30 sec | 38 °C | 25 ml | 40 l |

(continued)

| < Process A > | | | | |
|---|---|---|---|---|
| Step | Time | Temp. | Amount of replenisher | Capacity of tank |
| Washing with water | 2 min 10 sec | 24 °C | 1200 ml | 20 l |
| Fixing | 4 min 20 sec | 38 °C | 25 ml | 30 l |
| Washing with water (1) | 1 min 05 sec | 24 °C | counter-current from (2) to (1) | 10 l |
| Washing with water (2) | 1 min 00 sec | 24 °C | 1200 ml | 10 l |
| Stabilization | 1 min 05 sec | 38 °C | 25 ml | 10 l |
| Drying | 4 min 20 sec | 55 °C | | |

The amount of replenisher is given per width of 35 mm and length of 1 m.
The compositions of the processing solutions were as follows:

(Fixing solution)

| | Mother liquor (g) | Replenisher (g) |
|---|---|---|
| Disodium ethylenediaminetetraacetate | 0.5 | 0.7 |
| Sodium sulfite | 7.0 | 8.0 |
| Sodium hydrogensulfite | 5.0 | 5.5 |
| Aqueous ammonium thiosulfate solution (70 %) | 170.0 ml | 200.0 ml |
| Water | ad 1.0 ℓ | 1.0 ℓ |
| pH | 6.7 | 6.6 |

(Stabilizer)

| | Mother liquor (g) | Replenisher (g) |
|---|---|---|
| Formalin (37 %) | 2.0 ml | 3.0 ml |
| Polyoxyethylene-p-monononylphenyl ether (average degree of polymerization:10) | 0.3 | 0.45 |
| Disodium ethylenediaminetetraacetate | 0.05 | 0.08 |
| Water | ad 1.0 ℓ | 1.0 ℓ |
| pH | 5.0-8.0 | 5.0-8.0 |

(Color developer)

| | Mother liquor (g) | Replenisher (g) |
|---|---|---|
| Diethylenetriaminepentaacetic acid | 1.0 | 1.1 |
| 1-Hydroxyethylidene-1,1-diphosphonic acid | 3.0 | 3.2 |
| Sodium sulfite | 4.0 | 4.4 |
| Potassium carbonate | 30.0 | 37.0 |
| Potassium bromide | 1.4 | 0.7 |
| Potassium iodide | 1.5 mg | - |
| Hydroxylamine sulfate | 2.4 | 2.8 |
| 4-[N-Ethyl-N- β -hydroxyethylamino]-2-methylaniline sulfate | 4.5 | 5.5 |
| Water | ad 1.0 ℓ | 1.0 ℓ |
| pH | 10.05 | 10.10 |

(Bleaching solution)

| | Mother liquor (g) | Replenisher (g) |
|---|---|---|
| Sodium ferric ethylenediaminetetraacetate trihydrate | 100.0 | 120.0 |
| Disodium ethylenediaminetetraacetate | 10.0 | 11.0 |
| Ammonium bromide | 140.0 | 160.0 |
| Ammonium nitrate | 30.0 | 35.0 |
| Aqueous ammonia (27 %) | 6.5 ml | 4.0 ml |
| Water | ad 1.0 ℓ | 1.0 ℓ |
| pH | 6.0 | 5.7 |

| < Process B > | | | | |
|---|---|---|---|---|
| Step | Time | Temp. | Amount of replenisher | Capacity of tank |
| Color development | 3 min 15 sec | 38 °C | 45 ml | 10 ℓ |
| Bleaching | 1 min 00 sec | 38 °C | 20 ml | 4 ℓ |
| Bleach-fixing | 3 min 15 sec | 38 °C | 30 ml | 8 ℓ |
| Washing with water (1) | 40 sec | 35 °C | Countercurrent° from (2) to (1) | 4 ℓ |
| Washing with water (2) | 1 min 00 sec | 35 °C | 30 ml | 4 ℓ |
| Stabilization | 40 sec | 38 °C | 20 ml | 4 ℓ |
| Drying | 1 min 15 sec | 55 °C | | |

The amount of replenisher is given per width of 35 mm and length of 1 m.
The compositions of the processing solutions were as follows:

(Color developer)

| | Mother liquor (g) | Replenisher (g) |
|---|---|---|
| Diethylenetriaminepentaacetic acid | 1.0 | 1.1 |
| 1-Hydroxyethylidene-1,1-diphosphonic acid | 3.0 | 3.2 |
| Sodium sulfite | 4.0 | 4.4 |
| Potassium carbonate | 30.0 | 37.0 |
| Potassium bromide | 1.4 | 0.7 |
| Potassium iodide | 1.5 mg | - |
| Hydroxylamine sulfate | 2.4 | 2.8 |
| 4-[N-ethyl-N- β -hydroxyethylamino]-2-methylaniline sulfate | 4.5 | 5.5 |
| Water | ad 1.0 ℓ | 1.0 ℓ |
| pH | 10.05 | 10.10 |

(Bleaching solution)[Both mother liquor and replenisher (g)]

| | |
|---|---|
| Ferric ammonium ethylenediaminetetraacetate dihydrate | 120.0 |
| Disodium ethylenediaminetetraacetate | 10.0 |
| Ammonium bromide | 100.0 |
| Ammonium nitrate | 10.0 |
| Bleach-accelerating agent | 0.005 mol |

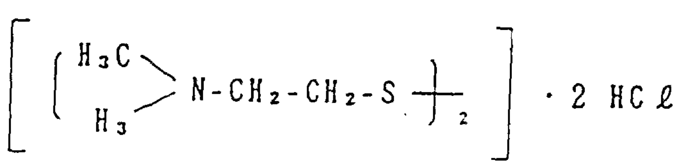

| | |
|---|---|
| Aqueous ammonia (27 %) | 15.0 ml |
| Water | ad 1.0 ℓ |
| pH | 6.3 |

(Bleach-fixing solution) [Both mother liquor and replenisher (g)]

| | |
|---|---|
| Ferric ammonium ethylenediaminetetraacetate dihydrate | 50.0 |
| Disodium ethylenediaminetetraacetate | 5.0 |
| Sodium sulfite | 12.0 |
| Aqueous ammonium thiosulfate solution (70 %) | 240.0 ml |
| Aqueous ammonia (27 %) | 6.0 ml |
| Water | ad 1.0 ℓ |
| pH | 7.2 |

(Washing water) [Both mother liquor and replenisher (g)]

City water was passed through a column of a mixed-bed system filled with H-type acidic cation exchange resin (Amberlite IR-120B; product of Rohm & Haas Co.) and OH-type anion exchange resin (Amberlite IR-400; product of Rohm & Haas Co.) to reduce calcium and magnesium ion concentration to 3 mg/1ℓ or less. Then 20 mg/ℓ of sodium dichloroisocyanurate and 0.15 g/ ℓ of sodium sulfate were added thereto. pH of the liquid was in the range of 6.5 to 7.5. (Stabilizing solution) [Both mother liquor and replenisher] (g)

| | |
|---|---|
| Formalin (37 %) | 2.0 ml |
| Polyoxyethylene-p-monononylphenyl ether | 0.3 |
| Aqueous ammonia (27 %) | 15.0 ml |
| Water | ad 1.0 ℓ |
| pH | 6.3 |

(Bleach-fixing solution) [Both mother liquor and replenisher (g)]

| | |
|---|---|
| Ferric ammonium ethylenediaminetetraacetate dihydrate | 50.0 |
| Disodium ethylenediaminetetraacetate | 5.0 |
| Sodium sulfite | 12.0 |
| Aqueous ammonium thiosulfate solution (70 %) | 240.0 ml |
| Aqueous ammonia (27 %) | 6.0 ml |
| Water | ad 1.0 ℓ |
| pH | 7.2 |

(Washing water) [Both mother liquor and replenisher (g)]

City water was passed through a column of a mixed-bed system filled with H-type acidic cation exchange resin (Amberlite IR-120B; product of Rohm & Haas Co.) and OH-type anion exchange resin (Amberlite IR-400; product of Rohm & Haas Co.) to reduce calcium and magnesium ion concentration to 3 mg/1ℓ or less. Then 20 mg/ℓ of sodium dichloroisocyanurate and 0.15 g/ ℓ of sodium sulfate were added thereto. pH of the liquid was in the range of 6.5 to 7.5. (Stabilizing solution) [Both mother liquor and replenisher] (g)

| | |
|---|---|
| Formalin (37 %) | 2.0 ml |
| Polyoxyethylene-p-monononylphenyl ether (average degree of polymerization: 10) | 0.3 |
| Disodium ethylenediaminetetraacetate | 0.05 |
| Water | ad 1.0 ℓ |
| pH | 6.3 |

**Claims**

1. A film cartridge containing a photographic film which comprises a spool, a photographic film engaged with the spool at an end and rolled round the spool and a cartridge body, the whole photographic film being placed in the cartridge, wherein the void volume V in the cartridge which is represented by the following formula is not higher than 0.25, the photographic film comprises at least one photosensitive silver halide emulsion layer formed on a transparent support and the photographic film contains a compound selected from the group consisting of the compounds of the following general formula (I):

$$V = \frac{B-A}{B}$$

wherein A = (cross-section area of film)
= (thickness of film) x (length of film)
B = (cross-sectional area of inside of cartridge)
= (cross-sectional area of cartridge body) - (cross-sectional area of spool)

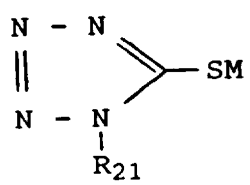

(I)

wherein $R_{21}$ represents an aliphatic, aromatic or heterocyclic group substituted with at least one -COOM or -$SO_3M$, M being a hydrogen atom, alkali metal atom, quaternary ammonium or quaternary phosphonium.

2. The film cartridge of claim 1, wherein the void volume V is 0.04 to 0.22.

3. The film cartridge of claim 2, wherein the void volume V is 0.08 to 0.18.

4. The film cartridge of claim 1, wherein the total amount of the compound incorporated into the photographic film is $10^{-6}$ to $10^{-1}$ mol per 1 mol of silver halide contained in the photographic film.

5. The film cartridge of claim 4, wherein the total amount of the compound is $10^{-5}$ to $10^{-2}$ mol per 1 mol of silver halide.

6. The film cartridge of claim 1, wherein silver halide incorporated into the photographic film comprises silver bromoiodide, silver chloroiodide or silver chlorobromoiodide, which contain about 20 molar % or less of silver iodide.

7. The film cartridge of claim 6, wherein silver halide comprises silver bromoiodide or silver chlorobromoiodide, which contains about 2 to 25 molar % of silver iodide.

**Patentansprüche**

1. Einen photographischen Film enthaltende Filmpatrone, umfassend eine Spule, einen mit der Spule an einem Ende im Eingriff befindlichen und auf der Spule aufgewickelten Film und einen Patronenkörper, wobei der gesamte photographische Film in der Patrone angeordnet ist, worin das Leervolumen V in der Patrone, das durch die folgende Formel wiedergegeben ist, nicht größer als 0,25 ist, der photographische Film wenigstens eine auf einem transparenten Träger gebildete photoempfindliche Silberhalogenid-Emulsionsschicht umfaßt und der photographische Film eine Verbindung enthält, die gewählt ist aus der aus Verbindungen der folgenden allgemeinen Formel (I) bestehenden Gruppe:

$$V = \frac{B\text{-}A}{B}$$

worin A = (Querschnittsfläche des Films)
= (Dicke des Films) x (Länge des Films)
B = (Querschnittsfläche des Innern der Patrone)
= (Querschnittsfläche des Patronenkörpers) - (Querschnittsfläche der Spule)

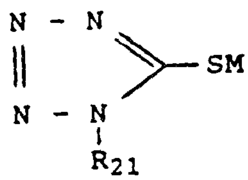

(I)

worin $R_{21}$ für eine aliphatische, aromatische oder heterocyclische Gruppe steht, die mit wenigstens einer Gruppe -COOM oder $-SO_3M$ substituiert ist, worin M für ein Wasserstoffatom, für ein Alkalimetall-Atom, für quaternäres Ammonium oder für quaternäres Phosphonium steht.

2. Filmpatrone nach Anspruch 1, worin das Leervolumen V 0,04 bis 0,22 ist.

3. Filmpatrone nach Anspruch 2, worin das Leervolumen V 0,08 bis 0,18 ist.

4. Filmpatrone nach Anspruch 1, worin die Gesamtmenge der in den photographischen Film eingearbeiteten Verbindung $10^{-6}$ bis $10^{-1}$ Mol pro ein Mol in dem photographischen Film enthaltenem Silberhalogenid ist.

5. Filmpatrone nach Anspruch 4, worin die Gesamtmenge der Verbindung $10^{-5}$ bis $10^{-2}$ Mol pro ein Mol Silberhalogenid ist.

6. Filmpatrone nach Anspruch 1, worin in den photographischen Film eingearbeitetes Silberhalogenid Silberbromiodid, Silberchloriodid oder Silberchlorbromiodid umfaßt, die etwa 20 Mol-% oder weniger Silberiodid umfassen.

7. Filmpatrone nach Anspruch 6, worin Silberhalogenid Silberbromiodid oder Silberchlorbromiodid umfaßt, das etwa 2 bis 25 Mol-% Silberiodid umfaßt.

**Revendications**

1. Une cartouche de film contenant un film photographique, qui comprend une bobine, un film photographique enclenché avec la bobine à une extrémité et enroulé autour de la bobine et un corps de cartouche, tout le film photographique étant placé dans la cartouche, où le volume de vide V de la cartouche qui est représenté par la formule suivante, n'est pas supérieur à 0,25, le film photographique comprend au moins une couche d'émulsion d'halogénure d'argent photosensible formée sur un support transparent et le film photographique contient un composé choisi parmi le groupe constitué par les composés de formule générale (I):

$$V= \frac{B-A}{B}$$

dans laquelle

A = (section droite du film)
= (épaisseur du film) x (longueur du film)
B = (section droite à l'intérieur de la cartouche)
= (section droite du corps de cartouche) - (section droite de la bobine)

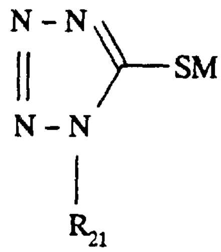

(I)

dans laquelle $R_{21}$ représente un groupe aliphatique, aromatique ou hétérocyclique ayant au moins un groupe -COOM ou $-SO_3M$, le reste M étant un atome d'hydrogène, un atome de métal alcalin, un groupe ammonium quaternaire ou un groupe phosphonium quaternaire.

**2.** La cartouche de film selon la revendication 1, dans laquelle le volume de vide V est de 0,04 à 0,22.

**3.** La cartouche de film selon la revendication 2, dans laquelle le volume de vide V est de 0,08 à 0,18.

**4.** La cartouche de film selon la revendication 1, dans laquelle la quantité totale du composé incorporé dans le film photographique est de $10^{-6}$ à $10^{-1}$ mol/mol d'halogénure d'argent contenu dans le film photographique.

**5.** La cartouche de film selon la revendication 4, dans laquelle la quantité totale du composé est de $10^{-5}$ à $10^{-2}$ mol/mol d'halogénure d'argent.

**6.** La cartouche de film selon la revendication 1, dans laquelle l'halogénure d'argent incorporé dans le film photographique comprend du bromoiodure d'argent, du chloroiodure d'argent ou du chlorobromoiodure d'argent, qui contient environ 20 mol % ou moins d'iodure d'argent.

**7.** La cartouche de film selon la revendication 6, dans laquelle l'halogénure d'argent comprend du bromoiodure d'argent ou du chlorobromoiodure d'argent qui contient environ 2 à 25 mol % d'iodure d'argent.

FIG. 1(a)

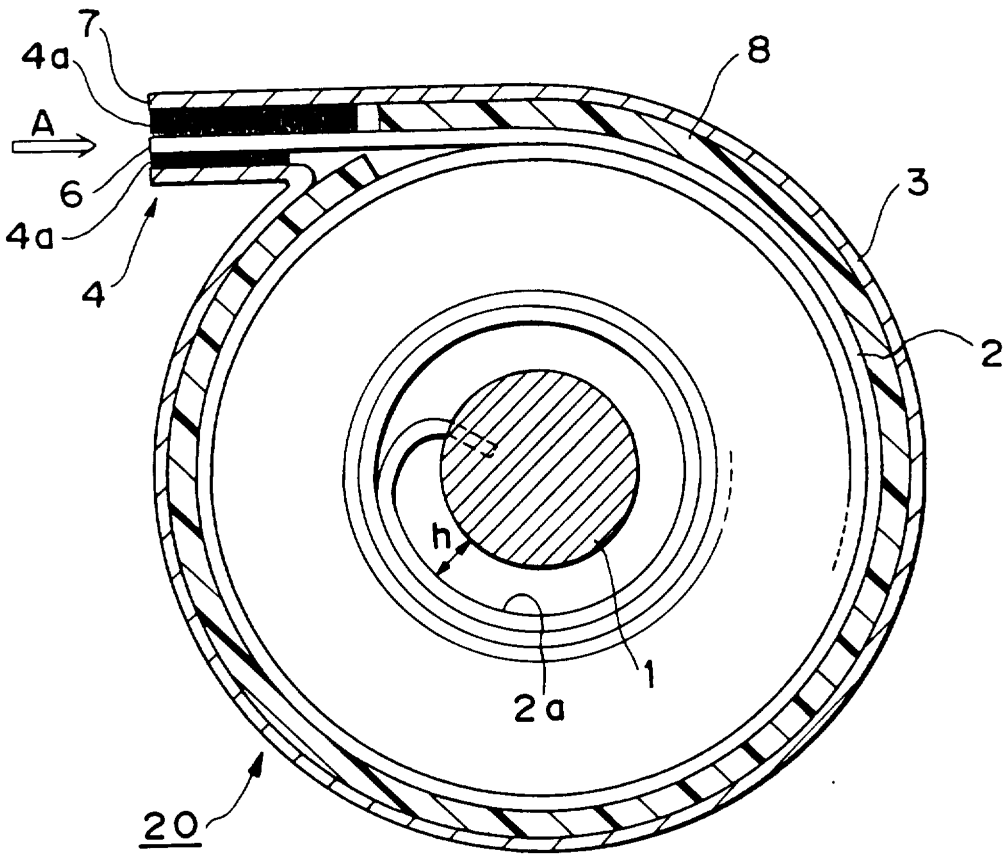


FIG. 1(b)

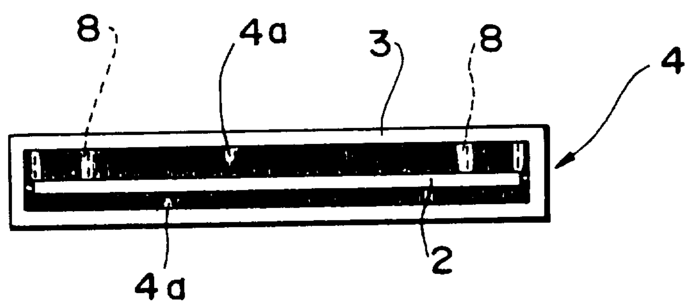

FIG. 2

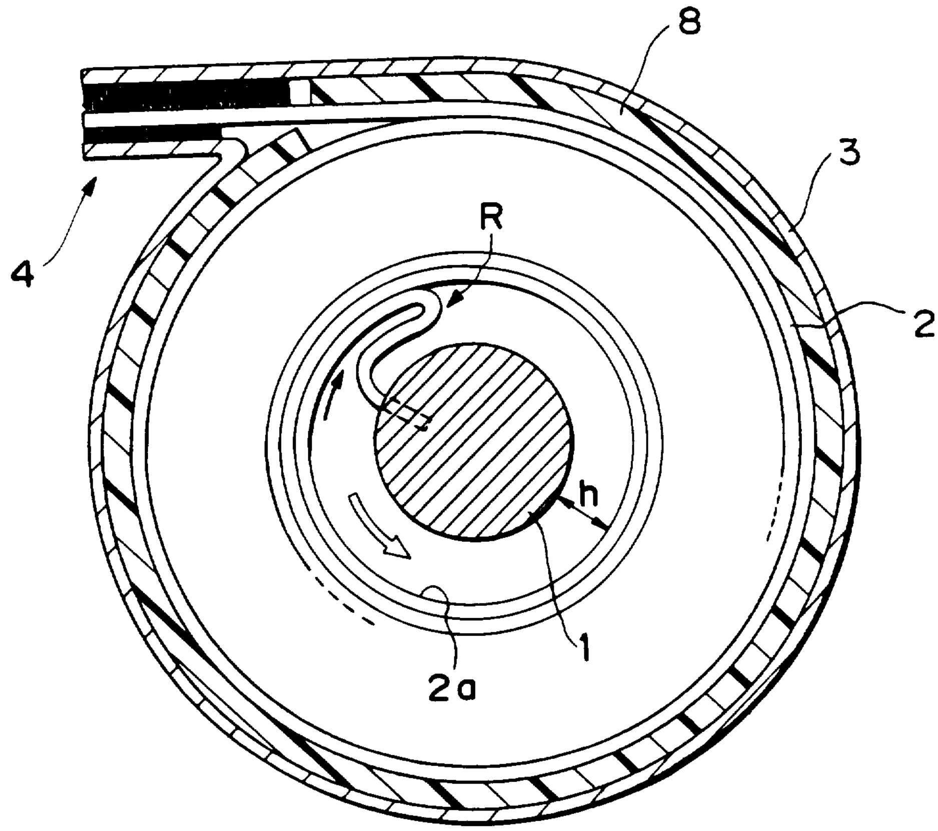

FIG. 3